# EUROPEAN PATENT SPECIFICATION

(11) **EP 2 722 924 B1**
(45) Date of publication and mention of the grant of the patent: **28.11.2018**
(21) Application number: 12801007.1
(22) Date of filing: 10.05.2012
(51) Int. Cl.: H01M 10/0569, H01G 11/60, H01M 10/0525, H01G 11/62

(54) **NON-AQUEOUS SOLVENT AND NON-AQUEOUS ELECTROLYTIC SOLUTION FOR ELECTRICAL STORAGE DEVICES, AND ELECTRICAL STORAGE DEVICE, LITHIUM SECONDARY BATTERY AND ELECTRIC DOUBLE-LAYER CAPACITOR EACH UTILIZING SAID NON-AQUEOUS SOLVENT AND SAID NON-AQUEOUS ELECTROLYTIC SOLUTION**
NICHTWÄSSRIGES LÖSUNGSMITTEL UND NICHTWÄSSRIGE ELEKTROLYTLÖSUNG FÜR STROMSPEICHERVORRICHTUNGEN, STROMSPEICHERVORRICHTUNG, LITHIUMSEKUNDÄRBATTERIE UND ELEKTRISCHER ZWEISCHICHTKONDENSATOR MIT DEM NICHTWÄSSRIGEN LÖSUNGSMITTEL UND DER NICHTWÄSSRIGEN ELEKTROLYTLÖSUNG
SOLVANT NON AQUEUX ET SOLUTION ÉLECTROLYTIQUE NON AQUEUSE POUR DISPOSITIFS DE STOCKAGE ÉLECTRIQUE, DISPOSITIF DE STOCKAGE ÉLECTRIQUE, BATTERIE SECONDAIRE AU LITHIUM ET CONDENSATEUR ÉLECTRIQUE À DEUX COUCHES UTILISANT TOUS TROIS LEDIT SOLVANT NON AQUEUX ET LADITE SOLUTION ÉLECTROLYTIQUE NON AQUEUSE

(30) Priority: 15.06.2011 US 201161497143 P; 29.03.2012 US 201261617456 P
(43) Date of publication of application: 23.04.2014
(73) Proprietor: Panasonic Intellectual Property Management Co., Ltd., Osaka-shi, Osaka 540-6207 (JP)
(72) Inventor: HASEGAWA, Masaki, Osaka 540-6207 (JP); TAKEUCHI, Takashi, Osaka 540-6207 (JP); GOTO, Natsumi, Osaka 540-6207 (JP)
(74) Representative: TBK
(86) International application number: PCT/JP2012/003046
(87) International publication number: WO 2012/172723

(56) References cited:
- EP-A1- 2 642 581
- WO-A1-2010/047092
- JP-A- 2005 135 906
- JP-A- 2005 217 008
- JP-A- 2005 327 785
- JP-A- 2006 172 775
- JP-A- 2006 286 650
- JP-A- 2010 086 914
- US-A1- 2006 124 973
- US-A1- 2010 081 062
- US-A1- 2011 171 540

## Description

### TECHNICAL FIELD

The present application relates to a nonaqueous solvent and a nonaqueous electrolytic solution usable for an electrical storage device for storing or accumulating electrochemical energy, and an electrical storage device using the same, such as a lithium secondary battery or an electric double layer capacitor.

### BACKGROUND ART

Recently, high voltage electrical storage devices in which a charge voltage and a discharge voltage of a single electrical storage element each exceeds 1.5 V have been progressively developed. As such high voltage electrical storage devices, lithium primary batteries, lithium ion secondary batteries, lithium polymer secondary batteries, electric double layer capacitors and the like have been put into practice.

For a high voltage electrical storage device, a nonaqueous electrolytic solution using an organic compound as a solvent is used. This is because water, if used as the solvent of the electrolytic solution, is electrolyzed by the high charge voltage and discharge voltage. A nonaqueous electrolytic solution is also used for an electrical storage device including an electrode which contains active lithium reactive with water and uses absorption or release of lithium.

The nonaqueous electrolytic solution is desired to have a high conductivity and a low viscosity in order to improve the discharge performance of the electrical storage device in which the nonaqueous electrolytic solution is used. When used as a solvent for a secondary battery, an electric double layer capacitor or the like, the nonaqueous electrolytic solution needs to be stable chemically and electrochemically in order not to deteriorate the performance of the electrical storage device as a result of the repetition of charge/discharge cycles.

From these points of view, for example, as a main solvent of the electrolytic solution of a lithium ion secondary battery, a mixed system of a cyclic carbonate (cyclic carbonic acid ester) represented by ethylene carbonate and a chain carbonate (chain carbonic acid ester) represented by ethylmethyl carbonate or dimethyl carbonate is used. As a main solvent of the electrolytic solution of an electric double layer capacitor, a cyclic carbonate represented by propylene carbonate is preferably used.

The above-described electrical storage devices are widely used as a main power source, a backup power source or an electric circuit power source for mobile communication devices or mobile electronic devices. Such mobile and portable devices are recently desired to be more compact and to have higher performance. Thus, the electrical storage devices are required to be further improved in the volumetric energy density.

In order to improve the volumetric energy density, it is conceivable to increase the average discharge voltage or to raise the volumetric capacitance density. As one measure for realizing this, it has been studied to increase the charge voltage.

Generally, as a positive electrode material of a lithium ion secondary battery, a lithium-containing transition metal oxide represented by lithium cobalt oxide, lithium nickel oxide or the like is used. In the case of a lithium ion secondary battery using such a positive electrode material, the utilization factor of lithium can be improved by increasing the charge voltage. As a result, the volumetric capacitance density is raised. In the case of an electric double layer capacitor using such a positive electrode material, the value of the electric double layer capacitance can be raised by increasing the charge voltage. As a result, the volumetric capacitance density can be raised.

However, in the case where one of a pair of electrodes is charged to a level equal to or higher than 4.3V on the basis of the dissolution/deposition potential of lithium, there is a serious problem that the electrolytic solution is oxidized and thus decomposed. Conventionally, even when a chain carbonate or cyclic carbonate which is known to have a superb oxidation resistance and so to be usable as a nonaqueous electrolytic solution solvent suitable for a high voltage electrical storage device is used, such a carbonate is oxidized and decomposed to generate gas. Such an oxidation-decomposition reaction conspicuously proceeds especially in a high temperature state and is accompanied by generation of a large amount of gas. Therefore, in the case where, for example, such a carbonate is used in a lithium ion secondary battery provided with an internal-pressure-sensitive current interrupt device (CID) for blocking the charge current when the inner pressure of the battery is increased, for example, when the battery is excessively charged, gas is generated by the oxidation-decomposition of the nonaqueous solvent. As a result, the CID malfunctions, and thus the lithium ion secondary battery may lose the function as a battery. Even in the case where the CID is not provided, a problem arises that when the amount of gas generation is excessive, the battery is swelled.

Patent Document 1 discloses a nonaqueous electrolytic secondary battery using a nonaqueous electrolytic solution containing cyclic sulfonic acid ester in order to suppress the chain carbonate or the cyclic carbonate from being oxidized and thus decomposed at a super high potential. In such a nonaqueous electrolytic secondary battery, when the positive electrode is charged to a potential equal to or higher than 4.5V, the cyclic sulfonic acid ester is oxidized and decomposed on the positive electrode side, and a surface of the positive electrode is covered with a film. This film suppresses the solvent from being decomposed on the surface of the positive electrode.

Patent Document 2 and Patent Document 3 propose incorporating a "hydrocarbon compound which may contain a fluorine atom" into a nonaqueous solvent at a content of 0.01% by weight or greater and 5% by weight or less. These patent documents describe that because a hydrocarbon compound which is stable against oxidation and reduction is present at an activation point on the surface of the electrode, sub reaction of the electrolytic solution component and the electrode active material can be suppressed in a high temperature state.

US 2011/0171540 A1 and US 2010/081062 A1 are directed at nonaqueous solvents which may be used for an electrical storage device.

### CITATION LIST

### PATENT LITERATURE

Patent Document 1: Japanese Laid-Open Patent Publication No. 2005-149750
Patent Document 2: Japanese Laid-Open Patent Publication No. 2004-111359
Patent Document 4: Japanese Laid-Open Patent Publication No. 2006-286650

### SUMMARY OF INVENTION

### TECHNICAL PROBLEM

However, as a result of studying the technologies disclosed in Patent Documents 1 through 3, the present inventors found that these technologies do not sufficiently suppress the decomposition of the electrolytic solution or suppress the sub reaction caused due to the electrolytic solution.

The present application alleviates these problems of the conventional art and provides a nonaqueous solvent and a nonaqueous electrolytic solution for an electrical storage device which have a superb oxidation resistance.

### SOLUTION TO PROBLEM

A nonaqueous solvent for an electrical storage device disclosed in the present application includes fluorine-containing cyclic saturated hydrocarbon having a structure represented by the following general formula (1) in which one or two substituents R are introduced into a cyclopentane ring; a compound having a relative dielectric constant of 25 or higher in the temperature range of 25°C to 40°C; and a fluoridized chain ester with hydrogen atoms being partially substituted with fluorine, the fluoridized chain ester including at least one of methyl 3,3,3-trifluoropropionate and 2,2,2-trifluoroethyl acetate (in general formula (1), R is represented by CₙX₂ₙ₊₁ where n is 1 or 2, at least one of (2n+1) pieces of X's is F, and the other X's are H).

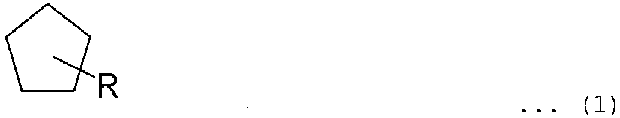

### ADVANTAGEOUS EFFECTS OF INVENTION

A nonaqueous solvent for an electrical storage device in an embodiment of the present invention includes fluorine-containing cyclic saturated hydrocarbon, and therefore has a high oxidation resistance and does not generate gas almost at all even when being decomposed. The nonaqueous solvent for an electrical storage device includes a compound having a relative dielectric constant of 25 or higher, and therefore can dissolve a support electrolyte salt and have a high ion conductivity as a nonaqueous electrolytic solution. Therefore, the nonaqueous solvent for an electrical storage device can realize a nonaqueous electrolytic solution for an electrical storage device, and an electrical storage device, which have a high oxidation resistance and high charge/discharge characteristics and are highly reliable even in a high temperature state for a long time.

### BRIEF DESCRIPTION OF DRAWINGS

FIG. **1(a)** is an isometric view showing a lithium ion secondary battery in an embodiment according to the present invention, **(b)** is a cross-sectional view taken along line **I-I** in FIG. **1(a) and (c)** shows a cross-sectional view of an electrode unit shown in FIGS. **1(a)** and **(b)** in enlargement.
FIG. **2** is a cross-sectional view showing an electric double layer capacitor in an embodiment according to the present invention.
FIG. **3** shows the dipole moment and the highest occupied molecular orbit (HOMO) energy of each type of fluorine-containing cyclic saturated hydrocarbon contained in a nonaqueous solvent for an electrical storage device in an embodiment.
FIG. **4** shows the size of a positive electrode **1** created in an example.
FIG. **5** shows the size of a negative electrode **2** created in an example.
FIG. **6** is a graph showing the discharge characteristic of an electric double layer capacitor **4a** in an example.
FIG. **7** is a graph showing the discharge characteristic of an electric double layer capacitor **4b** in a comparative example.

### DESCRIPTION OF EMBODIMENTS

The present inventors studied the technologies described in Patent Documents 1 through 3 in detail, and as a result, found the following. The nonaqueous electrolytic secondary battery disclosed in Patent Document 1 can suppress the decomposition reaction of a chain carbonate or a cyclic carbonate, but the effect thereof is not sufficient. In addition, because a film is formed on the surface of the positive electrode, the charge transfer resistance is raised on the interface of the positive electrode active material. This causes problems that the internal resistance of the battery is raised and the high-rate discharge performance is declined.

Regarding Patent Documents 2 and 3, the present inventors found the following. Patent Documents 2 and 3 describe that the nonaqueous electrolytic secondary battery disclosed in these patent publications can suppress the sub reaction of the electrolytic solution component and the electrode active material in a high temperature state owing to a "hydrocarbon compound which may contain a fluorine atom". However, the content of the hydrocarbon compound is as low as 5% by weight or less. In addition, the hydrocarbon compound does not have a property of, for example, being adsorbed to, or coordinating at, the surface of the positive electrode, and therefore does not selectively exist at a high concentration on the surface of the positive electrode. For these reasons, the nonaqueous electrolytic secondary batteries described in Patent Documents 2 and 3 are not considered to provide an effect of sufficiently suppressing the sub reaction.

Based on the above-described knowledge, the present inventors conceived a nonaqueous solvent and a nonaqueous electrolytic solution for an electrical storage device, which are superb in the oxidation resistance. The present inventors also conceived a nonaqueous solvent and a nonaqueous electrolytic solution for an electrical storage device, which do not generate a large amount of gas even when being decomposed. In addition, the present inventors conceived an electrical storage device which uses such a nonaqueous solvent and such a nonaqueous electrolytic solution for an electrical storage device and thus has high charge/discharge characteristics even when being charged at a high voltage and has a high reliability for a long time in a high temperature state.

A nonaqueous solvent for an electrical storage device according to the present invention includes fluorine-containing cyclic saturated hydrocarbon having a structure represented by the following general formula (1) in which one or two substituents R are introduced into a cyclopentane ring; and a compound having a relative dielectric constant of 25 or higher in the temperature range of 25°C to 40°C; and a fluoridized chain ester with hydrogen atoms being partially substituted with fluorine, the fluoridized chain ester including at least one of methyl 3,3,3-trifluoropropionate and 2,2,2-trifluoroethyl acetate (in general formula (1), R is represented by CₙX₂ₙ₊₁ where n is 1 or 2 at least one of (2n+1) pieces of X's is F, and the other X's are H).

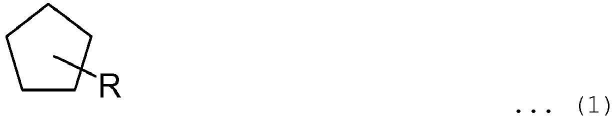

The nonaqueous solvent for an electrical storage device can further include a chain carbonate.

The fluorine-containing cyclic saturated hydrocarbon can be trifluoromethylcyclopentane.

The fluorine-containing cyclic saturated hydrocarbon can be 1,1-bis(trifluoromethyl)cyclopentane.

The fluorine-containing cyclic saturated hydrocarbon can be (2-fluoroethyl)cyclopentane.

The compound having a relative dielectric constant of 25 or higher can be a cyclic carbonate or a cyclic sulfone.

A nonaqueous electrolytic solution for an electrical storage device in an embodiment according to the present invention includes the nonaqueous solvent for an electrical storage device defined by any of the above; and a support electrolyte salt.

The support electrolyte salt can be a lithium salt.

The support electrolyte salt can be a quaternary ammonium salt.

An electrical storage device in an embodiment according to the present invention includes the nonaqueous solvent for an electrical storage device defined by any of the above.

A lithium ion secondary battery in an embodiment according to the present invention includes the nonaqueous electrolytic solution for an electrical storage device defined by any of the above.

An electric double layer capacitor in an embodiment according to the present invention includes the nonaqueous electrolytic solution for an electrical storage device defined by any of the above.

A nonaqueous solvent for an electrical storage device disclosed in the present application includes fluorine-containing cyclic saturated hydrocarbon, and therefore has a high oxidation resistance and does not generate gas almost at all even when being decomposed. The nonaqueous solvent for an electrical storage device according to the present invention includes a compound having a relative dielectric constant of 25 or higher, and therefore can dissolve a support electrolyte salt and have a high ion conductivity as a nonaqueous electrolytic solution. Therefore, the nonaqueous solvent for an electrical storage device can realize a nonaqueous electrolytic solution for an electrical storage device, and an electrical storage device, which have a high oxidation resistance and high charge/discharge characteristics and are highly reliable even in a high temperature state for a long time. In the case where the nonaqueous solvent for an electrical storage device further includes a chain carbonate, the separation of the compound having a relative dielectric constant of 25 or higher and the fluorine-containing cyclic saturated hydrocarbon is prevented, and the compatibility thereof is more improved. As a result, the support electrolyte salt can dissolved at a higher concentration. Accordingly, the nonaqueous solvent for an electrical storage device has a higher ion conductivity as a nonaqueous electrolytic solution.

An electrical storage device such as a lithium ion secondary battery, an electric double layer capacitor or the like disclosed in the present application has high charge/discharge characteristics even when being charged at a high voltage and is highly reliable even in a high temperature state for a long time.

Hereinafter, a nonaqueous solvent for an electrical storage device, a nonaqueous electrolytic solution for an electrical storage device, an electrical storage device, a lithium ion secondary battery, and an electric double layer capacitor in embodiments according to the present invention will be described with reference to the drawings.

### (EMBODIMENT 1)

A nonaqueous solvent for an electrical storage device in an embodiment according to the present invention will be described. The nonaqueous solvent in this embodiment is used for an electrolytic solution for an electrical storage device such as a lithium ion secondary battery, an electric double layer capacitor or the like.

A nonaqueous solvent contained in an electrolytic solution for an electrical storage device is required to have (1) a function of dissociating a support electrolyte salt, (2) a function of diffusing ions generated by the dissociation of the salt, and (3) a sufficiently high oxidation resistance to prevent the solvent from being oxidized and thus decomposed at the voltage at the time of charge/discharge.

Cyclic carbonates represented by ethylene carbonate generally have a high relative dielectric constant and also a high oxidation resistance, namely, have the features of (1) and (3). However, cyclic carbonates occasionally do not fully provide the function of (2) due to a high viscosity thereof. Therefore, a nonaqueous solvent having the functions of (1), (2) and (3) is conventionally realized by adding a chain carbonate having a low viscosity such as ethylmethyl carbonate or the like to a cyclic carbonate.

However, when the charge voltage is 4.3V or higher, the chain carbonate and the cyclic carbonate are oxidized and decomposed. At the same time, carbon dioxide is generated by the decomposition. The conventional nonaqueous solvents have this problem.

A nonaqueous solvent for an electrical storage device in this embodiment includes fluorine-containing cyclic saturated hydrocarbon represented by the following general formula (1), and a compound having a relative dielectric constant of 25 or higher. The nonaqueous solvent for an electrical storage device in this embodiment may further include a chain carbonate. The nonaqueous solvent for an electrical storage device in this embodiment includes a fluoridized chain ester with hydrogen atoms being partially substituted with fluorine in addition to, or instead of, the chain carbonate.

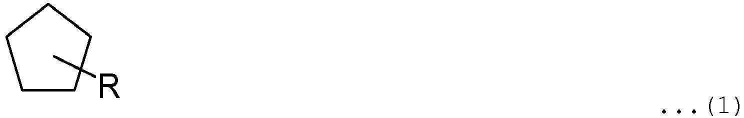

The fluorine-containing cyclic saturated hydrocarbon represented by general formula (1) has a structure in which one or two hydrogen atoms of cyclopentane are each substituted with a substituent R. The substituent R is represented by CₙX₂ₙ₊₁ where n is 1 or 2; at least one of (2n+1) pieces of X's is F, and the other X's are H. Namely, the substituent R is a chain saturated hydrocarbon group in which at least one hydrogen atom (H) is substituted with fluorine (F).

The fluorine-containing cyclic saturated hydrocarbon represented by general formula (1) has a redox potential which is higher than that of a cyclic carbonate or a chain carbonate, specifically, a redox potential equal to
or greater than 4.3V. This improves the oxidation resistance of the nonaqueous solvent for an electrical storage device. The fluorine-containing cyclic saturated hydrocarbon represented by general formula (1) does not contain a carbonate group and thus do not generate CO₂ even when being decomposed.

In general, saturated hydrocarbon has a high oxidation resistance. However, due to its properties of having a low dielectric constant and a low compatibility with a polar solvent, saturated hydrocarbon has been conventionally considered to be difficult to be used as a nonaqueous solvent for an electrical storage device. Therefore, as described in Patent Documents 2 and 3, saturated hydrocarbon is conventionally proposed to be used merely in a limited manner, e.g., to be contained in the solvent in a small amount equal to or less than 5% by weight.

However, as described in detail in the following examples, the present inventors found that cyclopentane having, as a substituent, a hydrocarbon group in which hydrogen is substituted with fluorine has a low degree of molecule symmetry, a superb compatibility with a polar solvent owing to having a dipole moment equal to or greater than 1.6 debye, and a superb oxidation resistance owing to having a cyclic saturated hydrocarbon structure.

The fluorine-containing cyclic saturated hydrocarbon represented by general formula (1) does not have any functional group poor in the oxidation stability in a molecule thereof, and so is superb in the oxidation stability. In addition, a fluorine atom bonded to the substituent R has a strong electron absorbing effect, and so the oxidation resistance of the fluorine-containing cyclic saturated hydrocarbon can be improved as compared to that of cyclic saturated hydrocarbon without hydrogen being substituted with fluorine. Preferably, the cyclic saturated hydrocarbon is cyclopentane because cyclopentane is liquid in a temperature range in which an electrical storage device is used and also because cyclopentane is easily available and easy to handle.

As compared to a compound in which a fluorine atom is directly bonded to a cyclopentane ring, such as 1,2-difluorocyclopentane or 1,1,2,2,3,3,4,5-octafluorocyclopentane, a compound represented by general formula (1) in which fluorine is bonded to the substituent R has a lower degree of molecule symmetry. Therefore, the compound represented by general formula (1) has a relatively large polarity and dielectric constant. For these reasons, the fluorine-containing cyclic saturated hydrocarbon represented by general formula (1) is superb in the compatibility with a polar solvent.

As the number of fluorine atoms bonded to the substituent R is larger, the substituent R absorbs more electrons from the cyclopentane ring, and so the oxidation resistance of the cyclopentane ring is more improved. Accordingly, from the viewpoint of improving the oxidation resistance, it is preferable that the substituent R is a trifluoromethyl group or a pentafluoroethyl group.

The number of the substituents R may be one or two. In the case where there are two substituents R, there is no specific limitation on the position in the cyclopentane to which each substituent R is to be introduced. From the viewpoint of lowering the melting point, it is preferable that the hydrocarbon has a molecular structure in which a carbon atom bonded to one substituent R, or a carbon atom adjacent to the carbon atom bonded to one substituent R, is bonded to the other substituent R. It is more preferable that the hydrocarbon has a molecular structure in which the two substituents R are bonded to one carbon atom.

In the case where there are two substituents R, the two substituents R may have the same structure as each other or have different structures from each other. In the case where there are more than two substituents R, the molecular weight is large and so the diffusion rate of molecules is decreased. Where the substituents R are excessively large, the molecular weight is excessively large, and thus the diffusion rate of molecules is decreased. For these reasons, from the viewpoint of the diffusion rate of molecules, the carbon number (n) of R is 1 or 2.

The "compound having a relative dielectric constant of 25 or higher" described below generally has a high viscosity and a low function of diffusing ions. By contrast, the fluorine-containing cyclic saturated hydrocarbon represented by general formula (1) has a low viscosity. Therefore, the fluorine-containing cyclic saturated hydrocarbon represented by general formula (1) also has a function of diffusing ions.

Specific compounds of the fluorine-containing cyclic saturated hydrocarbon represented by general formula (1) include, for example, fluoromethylcyclopentane, difluoromethylcyclopentane, trifluoromethylcyclopentane, (1-fluoroethyl)cyclopentane, (2-fluoroethyl)cyclopentane, (1,1-difluoroethyl)cyclopentane, (1,2-difluoroethyl)cyclopentane, (2,2-difluoroethyl)cyclopentane, (1,1,2-trifluoroethyl)cyclopentane, (1,2,2-trifluoroethyl)cyclopentane, (2,2,2-trifluoroethyl)cyclopentane, (1,1,2,2-tetrafluoroethyl)cyclopentane, (1,2,2,2-tetrafluoroethyl)cyclopentane, (pentafluoroethyl)cyclopentane, 1,1-bis(trifluoromethyl)cyclopentane, 1,2-bis(trifluoromethyl)cyclopentane, 1,3-bis(trifluoromethyl)cyclopentane, 1-(pentafluoroethyl)-1-(trifluoromethyl)cyclopentane, 1-(pentafluoroethyl)-2-(trifluoromethyl)cyclopentane, 1-(pentafluoroethyl)-3-(trifluoromethyl)cyclopentane, 1,1-bis(pentafluoroethyl)cyclopentane, 1,2-bis(pentafluoroethyl)cyclopentane, 1,3-bis(pentafluoroethyl)cyclopentane, and the like.

Among these compounds, from the viewpoint of the oxidation resistance and the viscosity, it is especially preferable to use, as the fluorine-containing cyclic saturated hydrocarbon, trifluoromethylcyclopentane, (pentafluoroethyl)cyclopentane, or 1,1-bis(trifluoromethyl)cyclopentane.

These compounds can be synthesized by a fluoridizing method using F₂, NF₃, HF, XeF₂, SF₄, CF₃I, C₂F₅I, DAST (diethylaminosulfur trifluoride), bis(2-methoxyethyl)aminosulfur trifluoride, tetrabutyl ammoniumfluoride, trimethyl(trifluoromethyl)silane or the like. There is no specific limitation on the starting material. For example, a compound having a cyclopentane structure, a cyclopentene structure, or a cyclopenta-1,3-diene structure is usable. An intended compound can be synthesized by introducing an alkyl group having a hydroxyl group, a tosyl group, a ketone group or a carboxyl group bonded thereto to a site in the starting material which is intended to be fluoridized, and fluoridizing the site by use of a fluoridizing reagent. Depending on the structure of the intended compound, a hydroxyl group, a tosyl group, a ketone group or a carboxyl group may be directly introduced into the starting material, and the fluoridization may be performed by use of the fluoridizing reagent.

The term "compound having a relative dielectric constant of 25 or higher" refers to a compound having a relative dielectric constant value of 25 or higher in the temperature range of 25°C to 40°C. In general, a solvent having a relative dielectric constant of 25 or higher has a polarity sufficient to dissociate the support electrolyte salt and so is suitable for a nonaqueous electrolytic solution for an electrical storage device. The nonaqueous solvent for an electrical storage device in this embodiment is also given a function of dissociating the support electrolyte salt by a compound having a relative dielectric constant of 25 or higher.

Examples of such a compound include cyclic carbonates such as ethylene carbonate, propylene carbonate, butylene carbonate and the like; cyclic sulfones such as sulfolane, methyl sulfolane and the like; gamma-butyrolactone; and the like. Table 1 shows the relative dielectric constants of these compounds in the range of 25°C to 40°C. It is especially preferable to use a cyclic carbonate or a cyclic sulfone because of a high relative dielectric constant thereof.

A fluoride of any of these compounds, for example, fluoroethylene carbonate, fluoropropylene carbonate or the like is also usable. One selected from these compounds, or a mixture of two or more thereof, may be used.

**[Table 1]**

| Compound | Relative dielectric constant (25°C) |
|---|---|
| Ethylene carbonate | 90(40°C) |
| Propylene carbonate | 65 |
| Butylene carbonate | 53 |
| Gamma-butyrolactone | 39 |
| Sulfolane | 43(30°C) |
| 3-methyl sulfolane | 29 |

A chain carbonate mainly dissociates a support electrolyte salt, and also provides the nonaqueous solvent for an electrical storage device with a function of diffusing generated ions because of a lower viscosity thereof than that of the "compound having a relative dielectric constant of 25 or higher".

Examples of usable chain carbonate include dimethyl carbonate, ethylmethyl carbonate, diethyl carbonate, methylpropyl carbonate, methylisopropyl carbonate, dipropyl carbonate, dibutyl carbonate, and the like. A fluoride of such a chain carbonate may be used. One of these chain carbonates, or a mixture of two or more thereof, may be used.

The fluoridized chain ester with hydrogen atoms being partially substituted with fluorine includes at least one of methyl 3,3,3-trifluoropropionate, and 2,2,2-trifluoroethyl acetate. Like in the case of the fluoridized chain carbonate,
where the number of substituting fluorine atoms is small in the fluoridized chain ester, the degree at which the oxidation resistance is improved is low. By contrast, where the number of substituting fluorine atoms is large, the size of the molecules is increased and thus the viscosity is easily raised. Therefore, the compatibility with other solvents is easily declined.

Such a fluoridized chain ester can be synthesized by directly fluoridizing a chain ester by use of F₂, NF₃ or SF₄, by introducing a fluoridized alkyl group into a chain ester by use of a fluoridizing reagent such as CF₃I or the like, or by reacting alcohol having a fluoridized alkyl group and a chloride of carboxylic acid such as acetyl chloride or the like.

As compared with a chain carbonate such as dimethyl carbonate, ethylmethyl carbonate, diethyl carbonate or the like, a fluoridized chain ester having a fluorine atom introduced thereinto has a higher oxidation resistance. This can be explained as occurring because a fluorine atom having a high electronegativity reduces the electron density on a carbonyl group. Accordingly, generation of gas derived from a chain carbonate during storage at a high temperature can be suppressed by use of a fluoridized chain ester instead of a chain carbonate. In the case where a nonaqueous solvent for an electrical storage device contains a fluoridized chain ester in addition to a chain carbonate, the ratio of the solvent having a high oxidation resistance in the nonaqueous solvent is higher than that in a conventional nonaqueous solvent owing to the fluoridized chain ester. Accordingly, generation of gas from a nonaqueous solvent during storage at a high temperature can be suppressed.

Table 2 shows the relative dielectric constants of these chain carbonates. As understood from Table 2, the relative dielectric constants of these carbonates are not very high. However, the support electrolyte salt is separated by a compound having a relative dielectric constant of 25 or higher contained in the solvent and thus the salt is solvated. As a result, the support electrolyte salt can be stably dissolved in the nonaqueous solvent. A chain carbonate which is especially preferably usable is a chain carbonate having a total carbon number of 9 or less. This is because in the case of a chain carbonate having a total carbon number of 10 or greater, the diffusion rate of molecules is decreased due to an increased molecular weight, and also the function of diffusing generated ions is declined.

**[Table 2]**

| Compound | Relative dielectric constant (25°C) |
|---|---|
| Dimethyl carbonate | 3.1 |
| Ethylmethyl carbonate | 3.0 |
| Diethyl carbonate | 2.8 |
| Methylpropyl carbonate | 2.9 |
| Methylisopropyl carbonate | 2.8 |
| Dipropyl carbonate | 2.7 |
| Dibutyl carbonate | 2.6 |

A compound having a relative dielectric constant of 25 or higher and fluorine-containing cyclic saturated hydrocarbon represented by general formula (1) have a high compatibility to each other. Therefore, the fluorine-containing cyclic saturated hydrocarbon can be mixed at a high concentration. By incorporating a large amount of fluorine-containing cyclic saturated hydrocarbon having a high oxidation resistance into the nonaqueous solvent, the oxidation resistance of the entire nonaqueous solvent can be raised. Owing to such a raised oxidation resistance, an electrical storage device using such a nonaqueous solvent as an electrolytic solution suppresses the decomposition of the nonaqueous solvent even when being charged/discharged at a voltage of 4.3 V or higher, and also suppresses the generation of gas.

By adding a chain carbonate to the nonaqueous solvent, the separation of the compound having a relative dielectric constant of 25 or higher and the fluorine-containing cyclic saturated hydrocarbon represented by general formula (1) can be prevented, and the compatibility thereof can be more improved. The solubility of the support electrolyte salt can also be improved. Accordingly, the nonaqueous solvent for an electrical storage device in this embodiment is superb in the oxidation resistance and the ion conductivity.

A sufficient effect is provided by using only a fluorine-containing cyclic saturated hydrocarbon compound and a compound having a relative dielectric constant of 25 or higher for a main solvent. However, in order to exhibit the above-described two features effectively, it is preferable that the nonaqueous solvent includes a fluorine-containing cyclic saturated hydrocarbon compound, a compound having a relative dielectric constant of 25 or higher, and a chain carbonate. The nonaqueous solvent for an electrical storage device in this embodiment further includes a fluoridized chain ester in addition to, or instead of, the chain carbonate.

It is preferable that a fluorine-containing cyclic saturated hydrocarbon compound, a compound having a relative dielectric constant of 25 or higher, and a chain carbonate in the nonaqueous solvent are contained at a prescribed ratio. Specifically, in order to exhibit a superb oxidation resistance, the fluorine-containing cyclic saturated hydrocarbon compound represented by general formula (1) is contained in the nonaqueous solvent at a content of 5% by volume or greater. Where the nonaqueous solvent contains the fluorine-containing cyclic saturated hydrocarbon compound at a content of 50% by volume or less and also a chain carbonate, the compound having a relative dielectric constant of 25 or higher and the fluorine-containing cyclic saturated hydrocarbon compound are mutually dissolved at a higher concentration of support electrolyte salt without being separated from each other.

Therefore, it is preferable that the fluorine-containing cyclic saturated hydrocarbon compound is contained in the nonaqueous solvent at a content of 5% by volume or greater and 50% by volume or less. More preferably, the content of the fluorine-containing cyclic saturated hydrocarbon compound is 10% by volume or greater and 30% by volume or less.

In order to dissolve and dissociate a support electrolyte salt such as a lithium salt, a quaternary ammonium salt or the like at a high concentration as described above, it is preferable that the chain carbonate is contained in the nonaqueous solvent at a content of 15% by volume or greater and 70% by volume or less. In this case, the support electrolyte salt can be dissolved in the nonaqueous solvent at a high concentration, and so a higher ion conductivity is obtained than in the case where the chain carbonate is not contained. In addition, an effect that the ion conductivity is further improved is provided by lowering the viscosity of the nonaqueous solvent. Similarly, it is preferable that the content of the fluoridized chain ester in the nonaqueous solvent is also 15% by volume or greater and 70% by volume or less.

As described above, a nonaqueous solvent for an electrical storage device in this embodiment has a high oxidation resistance owing to the fluorine-containing cyclic saturated hydrocarbon contained therein. Therefore, the nonaqueous solvent in this embodiment is suitable for a device having a high charge voltage exceeding 4.3V (superhigh withstand voltage nonaqueous electrical storage device), especially, an electrical storage device such as a lithium ion secondary battery or an electric double layer capacitor. Even in the case where such an electrical storage device is operated at a high voltage, is kept at a high temperature, is subjected to repeated charge/discharge cycles for a long time, etc., the nonaqueous solvent for an electrical storage device in this embodiment is not much deteriorated by oxidation, and so the high-rate charge/discharge characteristics thereof is not spoiled.

Fluorine-containing cyclic saturated hydrocarbon does not have a carbonate group, and so does not generate carbon dioxide even if being decomposed by oxidation. Therefore, an electrical storage device using the nonaqueous solvent for an electrical storage device in this embodiment can avoid the problems that a safety mechanism (CID) is actuated, which would otherwise be caused by the oxidation and decomposition of the solvent, and that the battery is swelled.

A nonaqueous solvent for an electrical storage device not according to the invention has sufficiently high characteristics when containing only a fluorine-containing cyclic saturated hydrocarbon compound and a compound having a relative dielectric constant of 25 or higher. However, when further containing a chain carbonate, the nonaqueous solvent for an electrical storage device in this embodiment can dissolve the support electrolyte salt at a higher concentration than when containing only a fluorine-containing cyclic saturated hydrocarbon compound and a compound having a relative dielectric constant of 25 or higher. Specifically, in the case where a chain carbonate is contained, the nonaqueous solvent for an electrical storage device in this embodiment can dissolve the support electrolyte salt at a concentration exceeding 1mol/L, like a general solvent usable as an electrolytic solution of an electrical storage device. As can be seen from this, a nonaqueous solvent for an electrical storage device in this embodiment has a sufficiently high ion conductivity as an electrolytic solution of an electrical storage device. Use of the nonaqueous solvent for an electrical storage device in this embodiment realizes an electrical storage device having high-rate charge/discharge characteristics.

### (EMBODIMENT 2)

Hereinafter, an electrolytic solution for an electrical storage device in an embodiment according to the present invention will be described. The electrolytic solution in this embodiment is usable for an electrical storage device such as a lithium ion secondary battery, an electric double layer capacitor, or the like.

The electrolytic solution for an electrical storage device in this embodiment includes a nonaqueous solvent and a support electrolyte salt.

The nonaqueous solvent is the nonaqueous solvent for electricity storage described in Embodiment 1, and includes fluorine-containing cyclic saturated hydrocarbon, a compound having a relative dielectric constant of 25 or higher, and a chain carbonate. The nonaqueous solvent includes a fluoridized chain ester in addition to, or instead of, the chain carbonate. The nonaqueous solvent is already described in detail and will not be described here.

As the support electrolyte salt, any of generally used support electrolyte salts can be used with no specific limitation in accordance with the type of the electrical storage device. The concentration of the support electrolyte salt in the nonaqueous solvent is adjustable in accordance with the usage thereof. With the nonaqueous electrolytic solution for an electrical storage device in this embodiment, a concentration of support electrolyte salt which is about 0.5 mol/L or higher and 2 mol/L or less can be realized by appropriately selecting fluorine-containing cyclic saturated hydrocarbon, a compound having a relative dielectric constant of 25 or higher, a chain carbonate and a support electrolyte salt. For the nonaqueous electrolytic solution for an electrical storage device, it is especially preferable that the concentration of support electrolyte salt is 0.75 mol/L
or higher and 1.5 mol/L or less, typically about 1 mol/L.

Examples of the support electrolyte salt usable in the case where the electrolytic solution in this embodiment is used for a lithium ion secondary battery include lithium salts such as LiPF₆, LiBF₄, LiAsF₆, LiClO₄, LiCF₃SO₃, LiSbF₆, LiSCN, LiCl, LiC₆H₅SO₃, LiN (CF₃SO₂)₂, LiC(CF₃SO₂)₃, C₄F₉SO₃Li and the like; and mixtures thereof.

Examples of the support electrolyte salt usable in the case where the electrolytic solution in this embodiment is used for an electric double layer capacitor include, in addition to the lithium salts mentioned above, quaternary ammonium salts such as (C₂H₅)₄NBF₄, (C₄H₉)₄NBF₄, (C₂H₅)₃CH₃NBF₄, (C₂H₅)₄NPF₆, (C₂H₅)₃CH₃N-N(SO₂CF₃)₂, (C₂H₅)₄N-N (SO₂CF₃)₂, and the like; and mixtures thereof.

Owing to containing a compound having a relative dielectric constant of 25 or higher and a chain carbonate, the electrolytic solution in this embodiment can dissolve and dissociate the support electrolyte salt at a sufficiently high concentration even if containing fluorine-containing cyclic saturated hydrocarbon. Therefore, the electrolytic solution in this embodiment has a high oxidation resistance and a high ion conductivity. Use of the electrolytic solution in this embodiment can realize an electrical storage device which can be charged at a high voltage exceeding 4.3V while having superb high-rate charge/discharge characteristics.

### (EMBODIMENT 3)

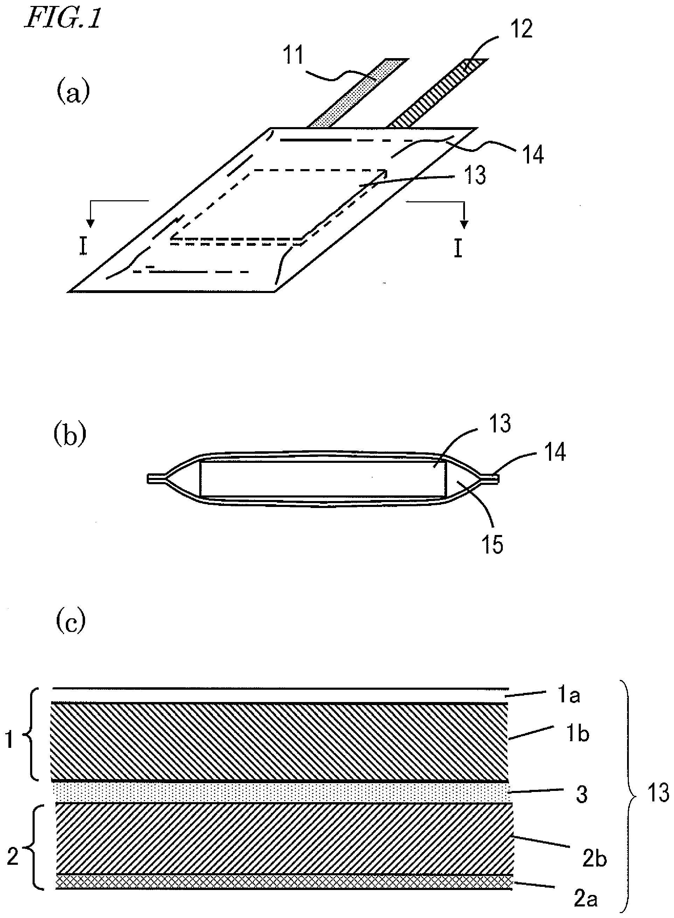

Hereinafter, an electrical storage device in an embodiment according to the present invention will be described. The electrical storage device in this embodiment is a lithium ion secondary battery. FIG.**1(a)** is an isometric view of a lithium ion secondary battery in this embodiment, and FIG.**1(b)** is a cross-sectional view along line **I-I** in FIG. **1(a)**.

As shown in FIGS. **1(a)** and **(b)****,** the lithium ion secondary battery in this embodiment includes an electrode unit **13,** a battery case **14** for accommodating the electrode unit **13,** and a nonaqueous electrolytic solution **15** filling the battery case **14.** A positive electrode in the electrode unit **13** is connected to a positive electrode lead **11,** and a negative electrode in the electrode unit **13** is connected to a negative electrode lead **12.** The positive electrode lead **11** and the negative electrode lead **12** are extended outside the battery case **14.**

As the nonaqueous electrolytic solution **15,** any nonaqueous electrolytic solution described in Embodiment 2 which is usable for a lithium ion secondary battery is used. Not according to the invention, a nonaqueous solvent containing ethylene carbonate (EC) (commercially available battery grade), ethylmethyl carbonate (EMC) (commercially available battery grade), and trifluoromethylcyclopentane (TFMCP) mixed at a ratio of 41:45:14 is usable as the nonaqueous electrolytic solution **15.** Ethylene carbonate is a compound having a relative dielectric constant of 25 or higher, ethylmethyl carbonate is a chain carbonate, and trifluoromethylcyclopentane is fluorine-containing cyclic saturated hydrocarbon. In this nonaqueous solvent, LiPF₆ (commercially available battery grade) is dissolved as the support electrolyte salt at a concentration of 1mol/L. In this embodiment not according to the invention, the above combination of nonaqueous solvent and support electrolyte salt is used as an example of the nonaqueous electrolytic solution 15. For embodiments according to the invention, combinations usable for a lithium ion secondary battery among the electrolytic solutions in Embodiment 2 are also usable.

FIG.**1(c)** shows a cross-sectional view of the electrode unit **13** in enlargement. As shown in FIG. **1(c)****,** the electrode unit **13** includes a positive electrode **1,** a negative electrode **2** and a separator **3** provided between the positive electrode **1** and the negative electrode **2.** The positive electrode **1** includes a positive electrode current collector **1a** formed of aluminum foil and a positive electrode active material layer **1b** formed of LiCoO₂ applied on a surface of the positive electrode current collector **1a.** The negative electrode **2** includes a negative electrode current collector **2a** formed of stainless steel (SUS304) mesh and a negative electrode active material layer **2b** formed of metal lithium pressure-contacted on a surface of the negative electrode current collector **2a.** The separator **3** is formed of, for example, a polyethylene microporous sheet.

A material of the positive electrode active material layer **1b** may be a lithium-containing transition metal oxide other than LiCoO₂. Examples of the usable material include LiₓCoO₂, LiₓNiO₂, LiₓMnO₂, LiₓCo_{y}Ni_{1-y}O₂, LiₓCo_{y}M_{l-y}O_{z}, LiₓNi_{1-y}M_{y}O_{z}, LiₓMn₂O₄, and LiₓMn_{2-y}M_{y}O₄ (M is at least one of Na, Mg, Sc, Y, Mn, Fe, Co, Ni, Cu, Zn, Al, Cr, Pb, Sb, and B; x = 0 to 1.2; y = 0 to 0.9; z = 1.7 to 2.3). Any other material which makes the potential of the positive electrode **1** at the time of charge exceed 4 V on the lithium basis is usable. A plurality of different materials may be mixed as the positive electrode active material. In the case where the positive electrode active material is powdery, the average particle diameter is not specifically limited but is especially preferably 0.1 to 30 µm. The positive electrode active material layer **1b** usually has a thickness of about 50 (m to 200 (m, but is not specifically limited regarding the thickness. The positive electrode active material layer 1b may have a thickness of 0.1 (m to 50 (m.

The positive electrode active material layer 1b may contain both of, or either one of, a conductor and a binder other than the active material. The positive electrode active material layer 1b may contain neither a conductor nor a binder and may be formed only of an active material.

The conductor for the positive electrode active material layer 1b may be any electron-conductive material which does not cause any chemical change at the charge/discharge potential of the positive electrode 1. For example, any of conductive fibers such as graphite materials, carbon black materials, carbon fibers, metal fibers and the like; metal powders; conductive whiskers; conductive metal oxides; organic conductive materials and the like may be used independently or as a mixture of two or more. The amount of the conductor is not specifically limited, but is preferably 1 to 50% by weight, and especially preferably 1 to 30% by weight, with respect to the positive electrode material.

The binder usable for the positive electrode active material layer 1b may be a thermoplastic resin or a thermosetting resin. Preferable examples of the binder include polyolefin resins such as polyethylene, polypropylene and the like; fluorine-based resins such as polytetrafluoroethylene (PTFE), poly(vinylidene fluoride) (PVDF), hexafluoropropylene (HFP) and the like; copolymeric resins thereof; and polyacrylic acids and copolymeric resins thereof.

In addition to the conductor and the binder, various other additives including a filler, a dispersant, an ion conductor, a pressure increasing agent, and the like may be used. A filler may be any fibrous material which does not cause any chemical change in the lithium ion secondary battery.

The material of the positive electrode current collector **1a** may be any electron conductor which does not cause any chemical change at the charge/discharge potential of the positive electrode 1. Examples of the usable material include stainless steel, aluminum, titanium, carbon, conductive resins, and the like. The surface of the positive electrode current collector **1a** is preferably surface-treated to have concaves and convexes. The form of the positive electrode current collector **1a** may be either foil, film, sheet, net, punched, lath, porous, foamed, fibrous, molded nonwoven cloth or the like. The thickness of the positive electrode current collector **1a** is not specifically limited, but is generally 1 to 500 (m.

The material of the negative electrode active material layer 2b may be any of carbon materials such as various types of natural graphite, various types of artificial graphite, graphitizing carbon, non-graphitizing carbon and the like, or mixtures thereof; lithium metal; composite materials containing silicon, tin or the like capable of reversibly absorbing/releasing lithium; or various alloy materials. It is preferable to use, for example, at least one selected from the group consisting of a single body of silicon, a silicon alloy, a compound containing silicon and oxygen, a compound containing silicon and nitrogen, a single body of tin, a tin alloy, a compound containing tin and oxygen, and a compound containing tin and nitrogen. In addition, an oxide material capable of reversibly absorbing/releasing lithium, such as lithium titanate or the like, or a lithium-containing composite nitride is usable.

A material usable for the negative electrode current collector **2a** may be, for example, copper foil, nickel foil, stainless steel foil or the like.

The nonaqueous electrolytic solution **15** in this embodiment has a high oxidation resistance and a high ion conductivity as described in Embodiment 2. Therefore, the lithium ion secondary battery in this embodiment has superb high-rate charge/discharge characteristics and can be charged at a high voltage exceeding 4.3V. The lithium ion secondary battery in this embodiment suppresses the actuation of a safety mechanism (CID), which would otherwise be caused by the oxidation and decomposition of the nonaqueous solvent, and also suppresses the battery expansion.

In this embodiment, the sheet-type lithium ion secondary battery is described as an example, but the lithium ion secondary battery in this embodiment may have any other shape. For example, the lithium ion secondary battery in this embodiment may have a cylindrical or polygonal shape, or may be sufficiently large to be used for an electric vehicle or the like.

The lithium ion secondary battery in this embodiment is preferably usable for mobile information terminals, mobile electronic devices, home-use compact power storage devices, motorcycles, electric vehicles, hybrid electric vehicles, and the like, as well as other devices.

### (EMBODIMENT 4)

Hereinafter, an electrical storage device in an embodiment according to the present invention will be described. The electrical storage device in this embodiment is an electric double layer capacitor.

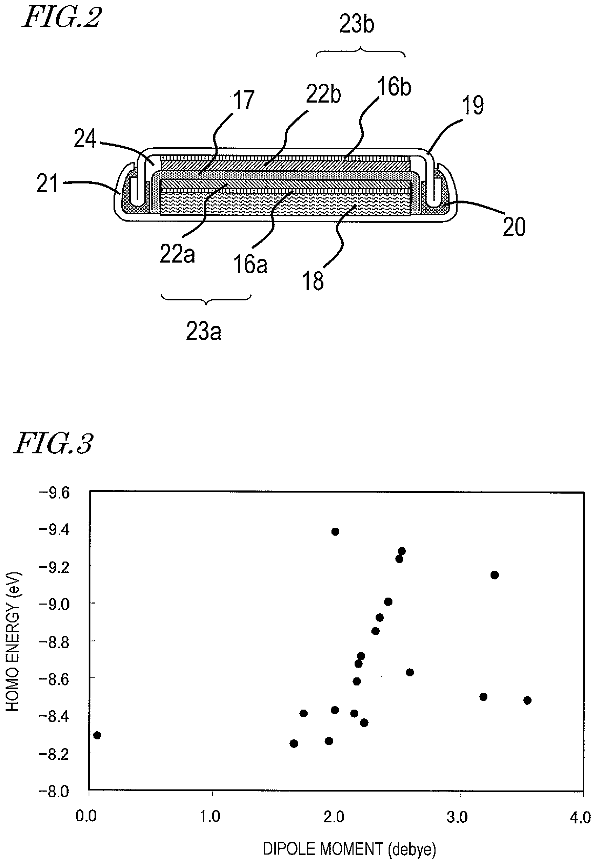

As shown in FIG. **2****,** the electric double layer capacitor in this embodiment includes disc-shaped electrodes **23a** and **23b** facing each other and a separator **17** located between the two electrodes **23a** and **23b.** The electrode **23a** includes a current collector **16a** and an electrode compound **22a** provided on a surface of the current collector **16a.** Similarly, the electrode **23b** includes a current collector **16b** and an electrode compound **22b** provided on a surface of the current collector **16b.** The current collectors **16a** and **16b** are formed of, for example, aluminum foil, and the electrode compounds **22a** and **22b** contains, for example, activated carbon.

An electrode unit including the electrodes **23a** and **23b** and the separator **17** is accommodated in a case **21** having a circular bottom surface. On the bottom surface of the case **21,** a spacer **18** is located, and the electrode unit is placed on the spacer **18.** The case **21** is opened at the top and is covered with a sealing plate **19.** A gap between the case **21** and the sealing plate **19** is filled with a gasket **20.**

The inside of the case **21** and the sealing plate **19** is impregnated with a prescribed amount of nonaqueous electrolytic solution **24** according to embodiment 2. Not according to the invention, the nonaqueous electrolytic solution **24** includes a nonaqueous solvent containing propylene carbonate (PC) (commercially available battery grade), ethylmethyl carbonate (EMC) (commercially available battery grade), and trifluoromethylcyclopentane (TFMCP) mixed at a ratio of 62:25:13, and (C₂H₅)₄NBF₄ dissolved in the nonaqueous solvent at a concentration of 1 mol/L. Propylene carbonate is a compound having a relative dielectric constant of 25 or higher, ethylmethyl carbonate is a chain carbonate, and trifluoromethylcyclopentane is fluorine-containing cyclic saturated hydrocarbon.

The nonaqueous electrolytic solution **24** in this embodiment has a high oxidation resistance and a high ion conductivity as described in Embodiment 2. Therefore, the electric double layer capacitor in this embodiment has superb high-rate charge/discharge characteristics and can be charged at a high voltage exceeding 4.3V.

The electric double layer capacitor in this embodiment is coin-shaped, but may have any other shape, for example, a cylindrical or polygonal shape.

### EXAMPLES

### 1. Evaluation on the dipole moment and the highest occupied molecular orbit (HOMO) energy of the fluorine-containing cyclic saturated hydrocarbon represented by general formula (1)

The dipole moment and the highest occupied molecular orbit energy of the fluorine-containing cyclic saturated hydrocarbon represented by general formula (1) were calculated. For comparison, the dipole moment and the highest occupied molecular orbit energy of methylcyclopentane (MCH) containing no fluorine were also calculated.

The dipole moment is an index representing the magnitude of intramolecular polarization, and is related to the compatibility with a polar solvent contained in the nonaqueous solvent in an embodiment. The highest occupied molecular orbit energy is an index representing the energy required to pull out one electron from a molecule, and is related to the oxidation resistance performance of the solvent.

The dipole moment and the highest occupied molecular orbit energy were calculated using a quantum-chemical calculation method. Specifically, the calculation was performed using commercially available first principle molecular orbit calculation software, by means of the density functional method (B3LYP) as the calculation method and 6-31G(d) as the basis function. The optimization of the energy value was performed by self consistent field calculation.

The calculation results are shown in Table 3. FIG. **3** also shows the results of plotting the dipole moment and the highest occupied molecular orbit energy of each type of fluorine-containing cyclic saturated hydrocarbon.

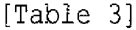

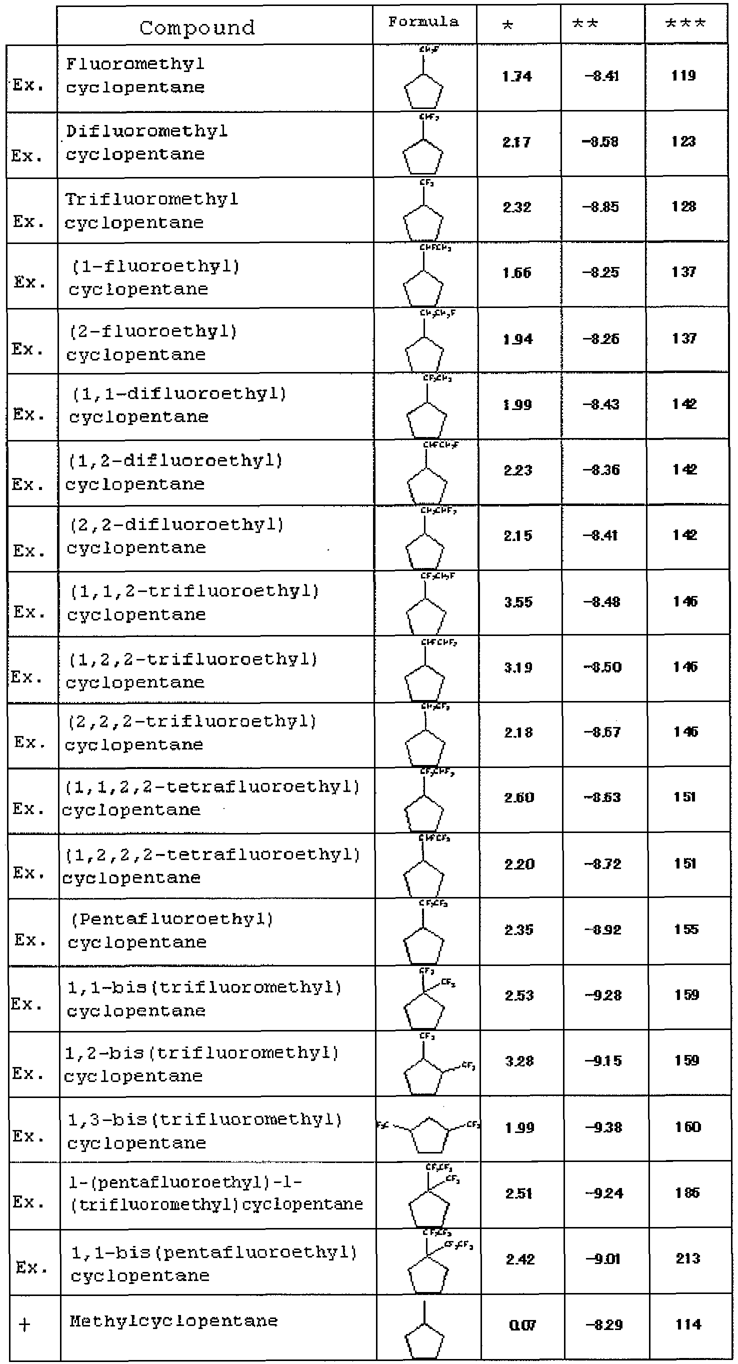

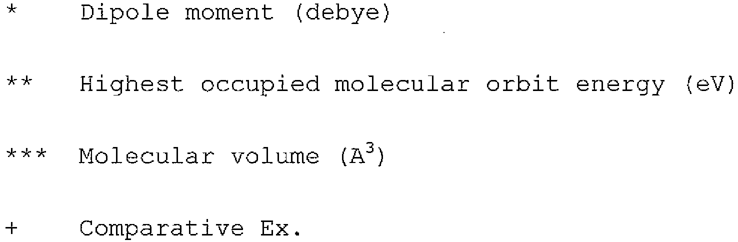

All the types of fluorine-containing cyclic saturated hydrocarbon represented by general formula (1) had a dipole moment larger than about 1.6 debye. The fluorine-containing cyclic saturated hydrocarbon having the smallest dipole moment was (1-fluoroethyl)cyclopentane (1FECP), which had a dipole moment of 1.66. By contrast, methylcyclopentane had a dipole moment of 0.07debye.

All the types of fluorine-containing cyclic saturated hydrocarbon represented by general formula (1) had a highest occupied molecular orbit energy smaller than that of ethylene carbonate, i.e., -0.88eV. Oxidation reaction is a reaction of pulling out electrons from a molecule. As the highest occupied molecular orbit energy is smaller (larger in a negative direction), a larger energy is required to pull out electrons, which means that the oxidation resistance is higher. Accordingly, it is understood that all the types of fluorine-containing cyclic saturated hydrocarbon in an embodiment obtained by introducing, as a substituent, an alkyl group having a fluorine atom into a cyclopentane cyclic structure have a high oxidation resistance. From the viewpoint of the oxidation resistance and the viscosity, it is especially preferable to use, as the fluorine-containing cyclic saturated hydrocarbon, trifluoromethylcyclopentane, (pentafluoroethyl)cyclopentane, or 1,1-bis(trifluoromethyl)cyclopentane. Accordingly, it is preferable that a nonaqueous solvent and a nonaqueous electrolytic solution for an storage device contain such a compound.

### 2. Solubility of the support electrolyte salt in the nonaqueous solvent

### <Preparation of the nonaqueous solvent>

### (EXAMPLE 1) (useful for understanding the invention)

As shown in Table 4, ethylene carbonate (EC) as the compound having a relative dielectric constant of 25 or higher, ethylmethyl carbonate (EMC) as the chain carbonate, and trifluoromethylcyclopentane (TFMCP) as the fluorine-containing cyclic saturated hydrocarbon were mixed at different ratios to prepare a plurality of types of nonaqueous solvents. LiPF₆ was added to each of the nonaqueous solvents at a concentration of 1 and 2 mol/L and mixed well to obtain electrolytic solutions A, B, C, D, E, F, G, H, I and J.

**[Table 4]**

| Electrolytic solution | Support electrolyte salt | Compound having relative dielectric constant of 25 or higher | Chain carbonate | Fluorine-containing cyclic saturated hydrocarbon | Mixed state |
|---|---|---|---|---|---|
| | LiPF₆ (mol/L) | EC (vol%) | EMC (vol%) | TFMCP (vol%) | |
| A | 1 | 75 | 18 | 7 | Uniform |
| B | 1 | 60 | 30 | 10 | Uniform |
| C | 1 | 45 | 40 | 15 | Uniform |
| D | 1 | 41 | 45 | 14 | Uniform |
| E | 1 | 25 | 52 | 23 | Uniform |
| F | 1 | 13 | 53 | 34 | Uniform |
| G | 1 | 5 | 48 | 47 | Uniform |
| H | 1 | 40 | 50 | 10 | Uniform |
| I | 1 | 20 | 70 | 10 | Uniform |
| J | 2 | 15 | 70 | 15 | Uniform |

### (EXAMPLE 2) (useful for understanding the invention)

As compounds having a relative dielectric constant of 25 or higher, ethylene carbonate (EC), propylene carbonate (PC), sulfolane (SLF), and 3-methyl sulfolane (3MeSLF) were prepared. As chain carbonates, dimethyl carbonate (DMC), ethylmethyl carbonate (EMC), diethyl carbonate (DEC), methylpropyl carbonate (MPC), methylisopropyl carbonate (MiPC), dipropyl carbonate (DPC), and dibutyl carbonate (DBC) were prepared. As fluorine-containing cyclic saturated hydrocarbon, trifluoromethylcyclopentane (TFMCP), 1,1-bis(trifluoromethyl)cyclopentane (11BTFMCP), and 2-fluoroethylcyclopentane (2FECP) were prepared. These were mixed at different ratios as shown in Tables 5 through 8 to prepare a plurality of types of nonaqueous solvents. LiPF₆ was added to each of these nonaqueous solvents at a concentration of 0.5 and 1 mol/L and mixed well to obtain electrolytic solutions K, L, M, N, O, P, Q, R, S, T, U, V, and W.

### (COMPARATIVE EXAMPLE 1)

As shown in Table 9, propylene carbonate (PC) and trifluoromethylcyclohexane (TFMCH) were mixed at a ratio of 75:25 to prepare a nonaqueous solvent. LiPF₆ was added to this nonaqueous solvent at a concentration of 0.2 mol/L and mixed well to obtain an electrolytic solution X. Only propylene carbonate (PC) was used as a nonaqueous solvent, and LiPF₆ was added to this nonaqueous solvent at a concentration of 0.5 mol/L and mixed well to obtain an electrolytic solution Y. Propylene carbonate (PC) and ethylmethyl carbonate (EMC) were mixed at a volumetric ratio of 75:25 to prepare a nonaqueous solvent. LiPF₆ was added to this nonaqueous solvent at a concentration of 0.5 mol/L and mixed well to obtain an electrolytic solution Z.

**[Table 5]**

| Electrolytic solution | Support electrolyte salt | Compound having relative dielectric constant of 25 or higher | | | Chain carbonate | | Fluorine-containing cyclic saturated hydrocarbon | Mixed state |
|---|---|---|---|---|---|---|---|---|
| | LiPF₆ (mol/L) | EC (vol%) | PC (vol%) | SLF (vol%) | EMC (vol%) | DEC (vol%) | TFMCP (vol%) | |
| K | 1 | 33 | --- | --- | --- | 50 | 17 | Uniform |
| L | 1 | --- | 53 | --- | 30 | --- | 17 | Uniform |
| M | 1 | --- | 33.3 | --- | 33.3 | --- | 33.3 | Uniform |
| N | 0.5 | --- | 75 | --- | --- | --- | 25 | Uniform |
| O | 1 | --- | --- | 33 | 50 | --- | 17 | Uniform |

**[Table 6]**

| Electrolytic solution | Support electrolyte salt | Compound having relative dielectric constant of 25 or higher | Chain carbonate | | | Fluorine-containing cyclic saturated hydrocarbon | Mixed state |
|---|---|---|---|---|---|---|---|
| | LiPF₆ (mol/L) | EC (vol%) | DMC (vol%) | MiPC (vol%) | MPC (vol%) | TFMCP (vol%) | |
| P | 1 | 29 | 57 | --- | --- | 14 | Uniform |
| Q | 1 | 29 | --- | 57 | --- | 14 | Uniform |
| R | 1 | 29 | --- | --- | 57 | 14 | Uniform |

**[Table 7]**

| Electrolytic solution | Support electrolyte salt | Compound having relative dielectric constant of 25 or higher | | Chain carbonate | | | Fluorine-containing cyclic saturated hydrocarbon | Mixed state |
|---|---|---|---|---|---|---|---|---|
| | LiPF₆ (mol/L) | PC (vol%) | 3MeSLF (vol%) | EMC (vol%) | DPC (vol%) | DBC (vol%) | TFMCP (vol%) | |
| S | 1 | 40 | --- | --- | 40 | --- | 20 | Uniform |
| T | 1 | 40 | --- | --- | --- | 40 | 20 | Uniform |
| U | 1 | --- | 29 | 57 | --- | --- | 14 | Uniform |

**[Table 8]**

| E lectrolytic solution | Support electrolyte salt | Compound having relative dielectric constant of 25 or higher | Chain carbonate | Fluorine-containing cyclic saturated hydrocarbon | | Mixed state |
|---|---|---|---|---|---|---|
| | LiPF₆ (mol/L) | PC (vol%) | EMC (vol%) | 11 BTFMCP (vol%) | 2FECP (vol%) | |
| V | 1 | 40 | 40 | 20 | --- | Uniform |
| W | 1 | 40 | 40 | --- | 20 | Uniform |

**[Table 9]**

| Electrolytic solution | Support electrolyte salt | Compound having relative dielectric constant of 25 or higher | Chain carbonate | Fluorine-containing cyclic saturated hydrocarbon | | Mixed state |
|---|---|---|---|---|---|---|
| | LiPF₆ (mol/L) | PC (vol%) | EMC (vol%) | TFMCP (vol%) | TFMCH (vol%) | |
| X | 0.2 | 75 | --- | --- | 25 | Uniform |
| Y | 0.5 | 100 | --- | --- | --- | Uniform |
| Z | 0.5 | 75 | 25 | --- | --- | Uniform |

The solvents used were prepared as follows.

### [Methylpropyl carbonate]

### [Methylisopropyl carbonate]

### [Dipropyl carbonate]

### [Dibutyl carbonate]

Commercially available products of methylpropyl carbonate (MPC) [CAS RN: 56525-42-9], methylisopropyl carbonate (MiPC) [CAS RN: 51729-83-0], dipropyl carbonate (DPC) [CAS RN: 623-96-1], and dibutyl carbonate (DBC) [CAS RN: 542-52-9] were used and purified by a rotary band precision fractionation device (produced by Oka Kogyo Kabushiki Kaisha). The purity of each obtained purified product, which was measured by gas chromatography (Shimadzu Corporation), was 99.5% or higher. Immediately before the preparation of the electrolytic solutions, each obtained product was dehydrated using a molecular sieve [4A] processed in vacuum at 200°C for 12 hours. The post-dehydration amount of moisture of each product was 20ppm or lower.

### [Trifluoromethylcyclopentane]

Trifluoromethylcyclopentane (TFMCP) was obtained by a synthesis method described below.

3.4g of cyclopentanecarboxylic acid (produced by Kanto Chemical Co., Inc.) was put into a 30 ml stainless steel autoclave with a valve and cooled in a dry ice-acetone bath. The inner pressure of the autoclave was reduced, and 10 g of SF₄ (produced by Kanto Chemical Co., Inc.) was introduced through the valve. The autoclave was sealed, and the reaction was caused and continued for 24 hours while the inside of the autoclave was heated to 130°C. After the reaction, a gas component was removed through the valve, and then the reaction mixture was washed with saturated baking soda water. The post-washing reaction mixture was refined by a rotary band precision fractionation device (produced by Taika Kogyo Kabushiki Kaisha). As a result, 2.4g of colorless liquid was obtained.

By the measurement of ¹H-NMR spectrum (CDCl₃), a multiplet corresponding to eight hydrogen atoms having a peak at 1.50 to 1.92ppm and a multiplet corresponding to one hydrogen atom having a peak at 2.46 to 2.66ppm were observed. Thus, it was found that the number of the hydrogen atoms of this compound was 9. By the measurement of ¹⁹F-NMR spectrum (CDCl₃), a doublet corresponding to three fluorine atoms having a peak at -71.78ppm was observed.

From the above-described results, it was found that the colorless liquid was trifluoromethylcyclopentane. The purity, which was measured by gas chromatography (using a gas chromatograph produced by Shimadzu Corporation), was 99.1%.

### [1.1-bis(trifluoromethyl)cyclopentane]

1.1-bis(trifluoromethyl)cyclopentane (11BTFMCP) was obtained by a synthesis method described below.

4.7g of cyclopentane-1,1-dicarboxylic acid (produced by Syntechem) was put into a 30ml stainless steel autoclave with a valve and cooled in a dry ice-acetone bath. The inner pressure of the autoclave was reduced, and 20 g of SF₄ (produced by Kanto Chemical Co., Inc.) was introduced through the valve. The autoclave was sealed, and the reaction was caused and continued for 24 hours while the inside of the autoclave was heated to 120°C. After the reaction, a gas component was removed through the valve, and then the reaction mixture was washed with saturated baking soda water. The post-washing reaction mixture was refined by a rotary band precision fractionation device (produced by Taika Kogyo Kabushiki Kaisha). As a result, 3.5g of colorless liquid was obtained.

By the measurement of ¹H-NMR spectrum (CDCl₃), a multiplet corresponding to four hydrogen atoms having a peak at 1.70 to 1.81ppm, and a multiplet corresponding to four hydrogen atoms having a peak at 2.00 to 2.10ppm were observed. Thus, it was found that the number of the hydrogen atoms of this compound was 8. By the measurement of ¹⁹F-NMR spectrum (CDCl₃), a singlet corresponding to six fluorine atoms having a peak at -72.79ppm was observed.

From the above-described results, it was found that the colorless liquid was 1.1-bis(trifluoromethyl)cyclopentane. The purity, which was measured by gas chromatography (using a gas chromatograph produced by Shimadzu Corporation), was 99.0%.

### [2-fluoroethylcyclopentane]

2-fluoroethylcyclopentane (2FECP) was obtained by a synthesis method described below.

4.7g of 2-cyclopentaneethanol (produced by Tokyo Chemical Industry Co., Ltd.) was put into a 100ml reactor, and 8.6ml of triethylamine (produced by Tokyo Chemical Industry Co., Ltd.) and 47ml of dehydrated dichloromethane (produced by Kanto Chemical Co., Inc.) were added. The resultant solution was ice-cooled to 5°C. To the resultant solution, 3.8ml of methanesulfonylchloride (produced by Tokyo Chemical Industry Co., Ltd.) was slowly added and stirred at 5°C for 1 hour. After the stirring, it was confirmed by silica gel thin layer chromatography (TLC) using a mixed solvent containing hexane and ethyl acetate at 3:1 for a developing solvent that the spot of the starting material disappeared and a new spot was generated. 50ml of distilled water was added to this solution, and the resultant solution was separated into two layers. The organic layer was washed with saturated saline solution. After the washing, anhydrous magnesium sulfate was added thereto, and the resultant solution was dried in high vacuum. As a result, 7.8g of pale orange 2-cyclopentylethyl methanesulfonate was obtained. The purity, which was measured by gas chromatography (using a gas chromatograph produced by Shimadzu Corporation), was 97.0%.

7.8g of 2-cyclopentylethyl methanesulfonate was put into a 100ml reactor. 25.4 g of tetrabutyl ammoniumfluoride (produced by Wako Pure Chemical Industries, Ltd.) and 12.0g of acetonitrile were added thereto and stirred at 50°C for 18 hours. By a gas chromatography analysis performed on the post-stirring reaction mixture (using a gas chromatograph produced by Shimadzu Corporation), it was confirmed that the peak derived from 2-cyclopentylethyl methanesulfonate disappeared and the reaction was completed. 20ml of distilled water and 30ml of pentane (produced by Kanto Chemical Co., Inc.) were added to this reaction mixture, and the resultant solution was separated into two layers. The organic layer was washed with saturated saline solution. After the washing, anhydrous magnesium sulfate was added thereto, and the resultant solution was dried in high vacuum. Pentane as the solvent was removed by distillation in a bath having a temperature of 60°C. The residual reaction mixture was refined by a rotary band precision fractionation device (produced by Taika Kogyo Kabushiki Kaisha). As a result, 2.8g of colorless liquid was obtained.

By the measurement of ¹H-NMR spectrum (CDCl₃), six peaks obtained as a result of a triplet corresponding to two hydrogen atoms having peaks at 4.54, 4,52, 4.51, 4.42, 4.40 and 4.39 ppm being coupled with a fluorine atom, a multiplet corresponding to nine hydrogen atoms having a peak at 1.49 to 1.96ppm, and a multiplet corresponding to two hydrogen atoms having a peak at 1.08 to 1.17ppm were observed. Thus, it was found that the number of the hydrogen atoms of this compound was 13. By the measurement of ¹⁹F-NMR spectrum (CDCl₃), a singlet corresponding to one fluorine atom having a peak at -218.4ppm was observed.

From the above-described results, it was found that the colorless liquid was 2-fluoroethylcyclopentane. The purity, which was measured by gas chromatography (using a gas chromatograph produced by Shimadzu Corporation), was 99.6%.

### [Trifluoromethyl cyclohexane]

A commercially available product of trifluoromethyl cyclohexane (TFMCH) [CAS RN: 401-75-2] was used. The commercially available product was refined by a rotary band precision fractionation device (produced by Taika Kogyo Kabushiki Kaisha). The purity of the obtained product, which was measured by gas chromatography (Shimadzu Corporation), was 99.5%.

Commercially available lithium battery grade products of ethylene carbonate, propylene carbonate, sulfolane, 3-methyl sulfolane, dimethyl carbonate, ethylmethyl carbonate, and diethyl carbonate were used.

### <Method and results of evaluation>

The state of each of the electrolytic solutions A through Z in Examples 1 and 2 and Comparative example 1 was visually observed. The compositions of the nonaqueous solvents, the amounts of LiPF₆ and the evaluation results are shown in Tables 4 through 9.

As shown in Table 4, the electrolytic solutions A, B, C, D, E, F, G, H, I and J produced by use of ethylene carbonate (EC) as the compound having a relative dielectric constant of 25 or higher, ethylmethyl carbonate (EMC) as the chain carbonate, and trifluoromethylcyclopentane (TFMCP) as the fluorine-containing cycle saturated hydrocarbon can dissolve LiPF₆, which is a support electrolyte salt, at a concentration of 1mol/L or higher. Thus, uniform nonaqueous electrolytic solutions were obtained.

As shown in Tables 5 through 8, also in the case where propylene carbonate (PC), sulfolane (SLF), or 3-methyl sulfolane (3MeSLF) is used as the compound having a relative dielectric constant of 25 or higher, dimethyl carbonate (DMC), ethylmethyl carbonate (EMC), methylpropyl carbonate (MPC), methylisopropyl carbonate (MiPC), dipropyl carbonate (DPC), or dibutyl carbonate (DBC) is used as the chain carbonate, and trifluoromethylcyclopentane (TFMCP), 1,1-bis(trifluoromethyl)cyclopentane (11BTFMCP), or (2-fluoroethyl)cyclopentane (2FECP) is used as the fluorine-containing cyclic saturated hydrocarbon, LiPF₆ as a support electrolyte salt can be dissolved at a high concentration, similarly to the above. Thus, the electrolytic solutions K, L, M, O, P, Q, R, S, T, U, V and W were obtained. In the case where the nonaqueous solvent contains no chain carbonate and contains trifluorocyclopentane (TFMCP) as the high dielectric constant solvent and the fluorine-containing cyclic saturated hydrocarbon, the uniform nonaqueous electrolytic solution N can be obtained when the concentration of the support electrolyte salt is 0.5 mol/L.

In the case where the nonaqueous solvent contains no chain carbonate and contains trifluorocyclohexane (TFMCH) as the high dielectric constant solvent and the fluorine-containing cyclic saturated hydrocarbon, as shown in Table 9, the uniform nonaqueous electrolytic solution X was obtained when the concentration of the support electrolyte salt was as low as 0.2 mol/L. It was found that the nonaqueous electrolytic solution N does not contain a chain carbonate but dissolves the support electrolyte salt at a higher concentration than the nonaqueous electrolytic solution X using trifluorocyclohexane (TFMCH).

### 3. Conductivity of the nonaqueous electrolytic solutions

Hereinafter, the results of measurement of the conductivity of the electrolytic solutions created in Examples 1 and 2 and Comparative example 1 will be described.

### <Measurement of the conductivity>

Among the electrolytic solutions in Examples 1 and 2 and Comparative example 1, the conductivity of each of the electrolytic solutions D, K, L, N, O, X, Y and Z was measured using a conductivity meter (produced by DKK-Toa Corporation). Table 10 shows the measured conductivity values of the electrolytic solutions.

**[Table 10]**

| Electrolytic solution | LiPF₆ (mol/L) | Conductivity (mS/cm) |
|---|---|---|
| D | 1 | 7.5 |
| L | 1 | 5.6 |
| L | 1 | 6.0 |
| N | 0.5 | 5.1 |
| O | 1 | 4.0 |
| X | 0.2 | 2.7 |
| Y | 0.5 | 5.0 |
| Z | 0.5 | 6.0 |

As shown in Table 10, the electrolytic solutions D, K, L, N, O, Y and Z each have a conductivity of 4.0 mS/cm or greater, whereas the electrolytic solution X has a conductivity of only 2.7 mS/cm. This is because the support electrolyte salt is not dissolved at a high concentration in the electrolytic solution X.

### 4. Creation and characteristic evaluation of the lithium ion secondary batteries

Lithium ion secondary batteries were created, and the characteristics thereof were evaluated. Hereinafter, the results will be described.

### <Preparation of the electrolytic solution>

### (EXAMPLE 3) (useful for understanding the invention)

In Example 3, lithium ion secondary batteries were created using the electrolytic solutions 3A, 3B, 3C, 3D and 3E prepared with the compositions shown in Table 11.

**[Table 11]**

| Electrolytic solution | Support electrolyte salt | Composition of nonaqueous solvent (vol) |
|---|---|---|
| Electrolytic solution 3A | 1M LiPF₆ | EC:EMC:TFMCP=41:45:14 |
| Electrolytic solution 3B | 1M LiPF₆ | EC:DEC:TFMCP=33:50:17 |
| Electrolytic solution 3C | 1M LiPF₆ | PC:EMC:TFMCP=53:30:17 |
| Electrolytic solution 3D | 0.2M LiPF₆ | PC:TFMCP=75:25 |
| Electrolytic solution 3E | 1M LiPF₆ | SLF:EMC:TFMCP=33:50:17 |

### (COMPARATIVE EXAMPLE 2)

In Comparative example 2, lithium ion secondary batteries were created using the electrolytic solutions 3F, 3G and 3H prepared with the compositions shown in Table 12.

**[Table 12]**

| Electrolytic solution | Support electrolyte salt | Composition of nonaqueous solvent (vol) |
|---|---|---|
| Electrolytic solution 3F | 0.2M LiPF₆ | PC:TFMCH=75:25 |
| Electrolytic solution 3G | 0.2M LiPF₆ | PC=100 |
| Electrolytic solution 3H | 0.2M LiPF₆ | PC:EMC=75:25 |

The lithium ion secondary batteries were created as follows.

### <Creation of the positive electrode>

First, as the positive electrode active material, LiCoO₂ (average particle diameter: 10µm; specific surface area by the BET method: 0.38m²/g) was prepared. To 100 parts by weight of the active material, 3 parts by weight of acetylene black as a conductor, 4 parts by weight of poly(vinylidene fluoride) as a binder, and an appropriate amount of N-methyl-2-pyrrolidone were added, stirred and mixed to obtain a slurry-like positive electrode compound. The poly(vinylidene fluoride) was used in the state of being dissolved in N-methyl-2-pyrrolidone.

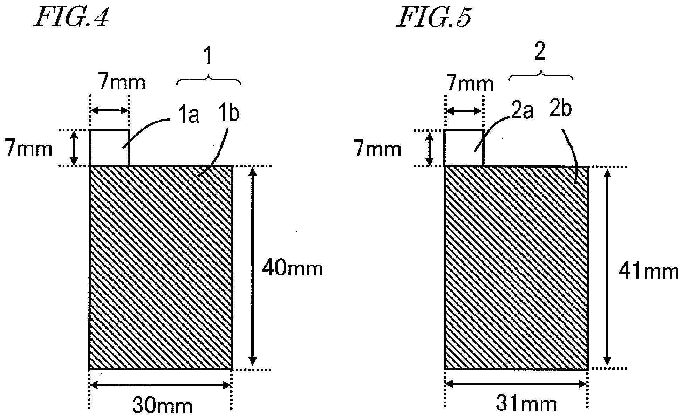

Next, as shown in FIG. **4****,** the slurry-like positive electrode compound was applied on one surface of the positive electrode current collector **1a** formed of aluminum foil having a thickness of 20 µm. The applied layer was dried and extended by a roller. Thus, the positive electrode 1 including the positive electrode material layer **1b** on the positive electrode current collector **1a** was obtained.

LiCoO₂ used as the positive electrode active material was prepared as follows.

While a saturated aqueous solution of cobalt sulfate was stirred at a low rate, an alkaline solution having sodium hydroxide dissolved therein was dropped thereto to obtain a precipitate of Co(OH)₂. This precipitate was filtrated, washed with water, and heated to 80°C in the air to be dried. The average particle diameter of the obtained hydroxide was about 10 µm.

Next, the obtained hydroxide was heat-treated at 380°C for 10 hours in the air to obtain CO₃O₄, which is an oxide. It was confirmed by powder X ray analysis that the obtained oxide had a single phase.

In addition, the obtained oxide was mixed with powder of lithium carbonate such that the ratio of the Co molarity and the Li molarity would be 1.00:1.00. The resultant mixture was heat-treated at 1000°C for 10 hours in the dried air. Thus, the intended LiCoO₂ was obtained. It was confirmed by a powder X ray analyzer (produced by Rigaku) that the obtained LiCoO₂ had a single-phase hexagonal layer structure. After pulverization and classification, the obtained LiCoO₂ was observed with a scanning electron microscope (produced by Hitachi High-Technologies Corporation) to confirm that the particle diameter was about 10 to 15µm. The average particle diameter was obtained by a scattering-type particle size distribution meter (produced by HORIBA).

The obtained electrode plate was punched out into the size shown in FIG. **4****,** and the positive electrode active material layer **1b** was delaminated from a tab, which was a lead attaching section. Thus, the positive electrode **1** was obtained. The positive electrode current collector **1a** coated with the positive electrode active material layer **1b** has a rectangular shape of 30mm × 40mm.

### <Creation of the negative electrode>

A stainless steel (SUS304) mesh was punched out into the size shown in FIG. **5** to form the negative electrode current collector **2a.** The negative electrode current collector **2a** includes an electrode section having a rectangular shape of 31mm × 41mm and a lead attaching section having a square shape of 7mm x 7mm. On the electrode section of the negative electrode current collector **2a,** a negative electrode active material layer **2b** formed of metal lithium having a thickness of 150µm was pressure-contacted. Thus, the negative electrode **2** was obtained.

### <Assembly>

The obtained positive electrode **1** and negative electrode **2** were stacked with the separator **3** interposed therebetween to create the electrode unit **13** as shown in FIG. **1(c)****.** As the separator, a polystyrene microporous sheet having a thickness of 20µm was used.

Next, as shown in FIG. **1(a)****,** the positive electrode lead **11** formed of aluminum was welded to the positive electrode **1** of the electrode unit **13,** and the negative electrode lead **12** formed of nickel was welded to the negative electrode **2** of the electrode unit **13.** Then, the electrode unit **13** was put into the battery case **14** opened on three sides and formed of an aluminum laminate film having a thickness of 0.12mm. The electrode unit **13** was fixed to the inside of the battery case **14** with a tape formed of PP. Openings including an opening through which the positive electrode lead **11** and the negative electrode lead **12** were extended outside were thermally welded, and one opening was left opened without being thermally welded. Thus, the battery case **14** was formed like a bag. Each of the electrolytic solutions 3A, 3B, 3C, 3D, 3E, 3F, 3G and 3H was injected as the nonaqueous electrolytic solution **15** through the opening not thermally welded. After the battery case **14** was treated with pressure reduction and deaeration, the opening was thermally welded in a reduced pressure state to seal the battery. From the electrolytic solutions 3A, 3B, 3C, 3D, 3E, 3F, 3G and 3H, batteries 3a, 3b, 3c, 3d, 3e, 3f, 3g, and 3h were obtained. Each battery had a thickness of 0.5mm, a width of 50mm and a height of 100mm. The designed capacitance of the battery at the time of charge at 4.3V was 40 mAh.

### <Evaluation on the high-rate discharge characteristic>

The high-rate discharge characteristic of each of the created batteries 3a, 3b, 3c, 3d, 3e, 3f, 3g, and 3h was evaluated.

In an environment of 25°C, each of the batteries was treated with constant current charge at a current value of 2mA until the voltage became 4.3V, and then treated with constant current discharge at a current value of 2 mA until the voltage became 3.0V. The discharge capacitance obtained at this point was set as the initial discharge capacitance.

Next, each of batteries 3d, 3f, 3g and 3h was treated with constant current charge at a current value of 8mA until the voltage became 4.3V, and then treated with constant voltage charge at 4.3V until the current value was attenuated to 2mA. Then, each of the batteries was treated with constant current discharge at a current value of 8 mA until the voltage became 3.0V. The discharge capacitance obtained at this point was set as the 0.2C high-rate discharge capacitance. The ratio of the 0.2C high-rate discharge capacitance with respect to the initial discharge capacitance for each battery is set as the 0.2C high-rate discharge characteristic (0.2C high-rate discharge characteristic = 0.2C high-rate discharge capacitance/initial discharge capacitance) and the percentage thereof is shown in Table 13.

Each of batteries 3a, 3b, 3c, 3d and 3e was treated with constant current charge at a current value of 8mA until the voltage became 4.3V, and then treated with constant voltage charge at 4.3V until the current value was attenuated to 2mA. Then, each of the batteries was treated with constant current discharge at a current value of 40 mA until the voltage became 3.0V. The discharge capacitance obtained at this point was set as the 1C high-rate discharge capacitance. The ratio of the 1C high-rate discharge capacitance with respect to the initial discharge capacitance for each battery is set as the 1C high-rate discharge characteristic (1C high-rate discharge characteristic = 1C high-rate discharge capacitance/initial discharge capacitance) and the percentage thereof is shown in Table 14.

### <High-temperature storage>

On each of the created batteries 3a, 3b, 3c, 3d, 3e, 3f, 3g and 3h, a high-temperature storage test was performed in a charged state.

In an environment of 25°C, each of the batteries was treated with constant current charge at a current value of 2mA until the voltage became 4.3V. Then, each of the batteries in the charged state was maintained in an environment of a constant temperature bath of 85°C for 3 days. It is considered that if the solvent contained in the electrolytic solution is oxidized and decomposed during this period, CO₂ is generated. Then, each of the batteries was taken out from the constant temperature bath, and the generated gas was quantized and component analysis was performed by gas chromatography. Tables 13 and 14 show the amount of CO₂ generation calculated from the results.

As shown in Table 13, the battery 3g in Comparative example 2 containing only propylene carbonate (PC) as the nonaqueous solvent has a 0.2C high rate discharge characteristic of 26.2%. By contrast, the battery 3d in Example 3 containing fluorine-containing cyclic saturated hydrocarbon has an improved 0.2C high rate discharge characteristic of 41.3%. It is considered that this occurs for the following reason. In the battery 3d in Example 3, since the fluorine-containing cyclic saturated hydrocarbon is contained, the viscosity of the electrolytic solution is reduced, and thus lithium ions and counter anions are easily diffused. This raises the discharge capacitance. As compared with the battery 3f in Comparative example 2 in which trifluoromethylcyclohexane is used as the nonaqueous solvent, the battery in Example 3 obtains a higher 0.2C high rate discharge characteristic. This is also considered to occur because the viscosity of trifluoromethylcyclopentane is lower than that of trifluoromethylcyclohexane as described above.

As shown in Table 14, the batteries 3a, 3b, 3c and 3e in Example 3 containing a chain carbonate has a 1C high rate discharge characteristic of 40% or higher, whereas the battery 3d in Example 3 has a 1C high rate discharge characteristic of 1.1%. It is considered that this occurs for the following reason. In the batteries 3a, 3b, 3c and 3e in Example 3, since the nonaqueous solvent contains a chain carbonate, the concentration of the support electrolyte salt in the nonaqueous solvent can be raised, and thus the ion conductivity is improved. In this manner, when an electrolytic solution in this embodiment is used, the reduction of the high rate discharge characteristic can be alleviated as compared with when an electrolytic solution containing only propylene carbonate (PC) as the nonaqueous solvent is used.

The electrolytic solution 3A containing trifluoromethylcyclopentane (TFMCP) as the fluorine-containing cyclic saturated hydrocarbon has a conductivity of 7.5mS/cm as shown in Table 10 as the electrolytic solution D. However, an electrolytic solution having the same composition ratio, except that trifluoromethylcyclohexane (TFMCH) is used instead of trifluoromethylcyclopentane (TFMCP), has a conductivity of 7.0 mS/cm. The viscosity of trifluoromethylcyclopentane (TFMCP) is lower than that of trifluoromethylcyclohexane (TFMCH). It is considered that use of trifluoromethylcyclopentane (TFMCP) provides an effect of lowering the viscosity of the electrolytic solution and thus improving the conductivity.

In the batteries 3a, 3b, 3c, 3d and 3e in Example 3, the amount of CO₂ gas generation during high-temperature storage is 0.6ml or less. Since these batteries contain fluorine-containing cyclic saturated hydrocarbon, oxidation of the electrolytic solution is suppressed. This effect is provided at approximately the same degree regardless of whether the nonaqueous solvent contains a chain carbonate or not.

By contrast, in the batteries 3g and 3h in the comparative example which uses an electrolytic solution not containing fluorine-containing cyclic saturated hydrocarbon, the amount of CO₂ gas generation during high-temperature storage is 1.1ml or greater.

**[Table 13]**

| | Battery | Initial discharge capacitance (mAh/g) | 0.2 C high-rate discharge characteristic (%) | Amount of CO₂ generation (ml) |
|---|---|---|---|---|
| Example 3 | 3d | 39.4 | 41.3 | 0.53 |
| Comparative example 2 | 3f | 39.1 | 37.7 | 0.51 |
| | 3g | 39.2 | 26.2 | 1.17 |
| | 3h | 39.7 | 48.5 | 1.96 |

**[Table 14]**

| | Battery | Initial discharge capacitance (mAh/g) | 1 C high-rate discharge characteristic (%) | Amount of CO₂ generation (ml) |
|---|---|---|---|---|
| Example 3 | 3a | 39.8 | 82.4 | 0.44 |
| | 3b | 39.8 | 63.5 | 0.33 |
| | 3c | 39.9 | 66.5 | 0.31 |
| | 3d | 39.4 | 1.1 | 0.58 |
| | 3e | 39.8 | 41.5 | 0.29 |

### 5. Creation and evaluation of the electric double layer capacitor

Electric double layer capacitors were created, and the characteristics thereof were evaluated. Hereinafter, the results will be described. The electric double layer capacitors were created as follows.

### <Preparation of the electrolytic solution>

### (Example 4) (useful for understanding the invention)

In Example 4, a mixture solvent was prepared by mixing propylene carbonate (PC), ethylmethyl carbonate (EMC), and trifluoromethylcyclopentane (TFMCP) at a weight ratio of 62:25:13. In this mixture solvent, (C₂H₅)₄NBF₄ was dissolved at a concentration of 1 mol/L. Thus, an electrolytic solution 4A was obtained.

### (COMPARATIVE EXAMPLE 3)

In a comparative example, an electrolytic solution containing only propylene carbonate (PC) as the solvent was prepared. In this solvent, (C₂H₅)₄NBF₄ was dissolved at a concentration of 1 mol/L. Thus, an electrolytic solution 4B was obtained.

### <Creation of the electrode>

The electrode was created using activated carbon powder (specific surface area: 1700 m²/g; average particle diameter: 2 µm). 100 mg of activated carbon powder and 20 mg of acetylene black were mixed uniformly, and 20 mg of polyvinylpyrrolidone and 800mg of methanol were added thereto, to obtain a slurry. This slurry-like electrode compound was applied on the current collector formed of aluminum foil and dried in vacuum. The weight of the electrode compound applied was 2.2mg/cm² with respect to the current collector. The obtained electrode plate was punched out into a disc having a diameter of 12.5mm to form an electrode.

### <Assembly>

Using the obtained disc-shaped electrode, a coin-type electric double layer capacitor as shown in FIG. **2** was assembled. First, the electrodes **23a** and **23b** were located so as to face each other while the separator **17** formed of a polypropylene nonwoven cloth sheet punched out into a circle having a diameter of 15mm is interposed therebetween. Thus, the electrode unit was formed. The electrode unit was put into the case **21.** After the inside of the case **21** was impregnated with a prescribed amount of the electrolytic solution 4A or 4B, the capacitor was sealed with the sealing plate **19** provided with the gasket **20.** Thus, an electric double layer capacitor **4a** using the electrolytic solution 4A and an electric double layer capacitor **4b** using the electrolytic solution 4B were created.

### <Evaluation by the charge/discharge test>

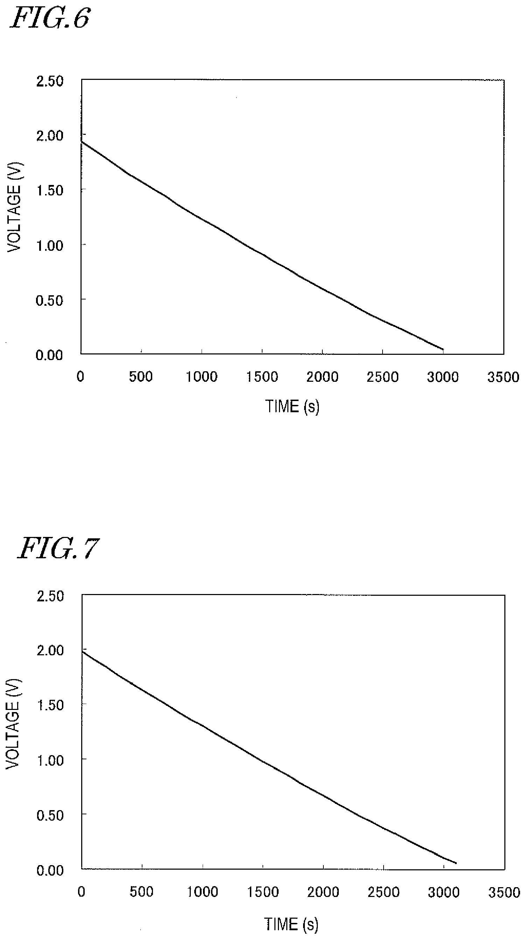

In an environment of 25°C, the created electric double layer capacitors **4a** and **4b** were subjected to a charge/discharge test at a constant current of 0.1mA in a voltage range of 0V to 2.0V. FIG. **6** shows the results of the charge/discharge test conducted on the electric double layer capacitor **4a,** and FIG. **7** shows the results of the charge/discharge test conducted on the electric double layer capacitor **4b.**

As shown in FIG. **6** and FIG. **7**, in the case where the electric double layer capacitor **4a** in Example 4 is used and in the case where the electric double layer capacitor **4b** in Comparative example 3 is used, substantially the same characteristic is exhibited.

Accordingly, it is understood that a nonaqueous electrolytic solvent and an electrolytic solution for an electrical storage device disclosed in the present application are preferably usable also in an electric double layer capacitor.

A main purpose of this example was to confirm that an electric double layer capacitor equivalent to or higher than the conventional electric double layer capacitor can be created using a nonaqueous electrolytic solvent and an electrolytic solution for an electrical storage device in an embodiment. Therefore, the created electric double layer capacitors were not subjected to a high-temperature storage test. Nonetheless, in the electrolytic solution in Example 4, like in the electrolytic solutions in Example 3, the oxidation reaction is suppressed in a high potential state. Therefore, the electric double layer capacitor in Example 4 is highly reliable.

### 6. Effect of fluoridized chain ester

Lithium ion secondary batteries were created, and the characteristics thereof were evaluated. Hereinafter, the results will be described.

### <Preparation of the electrolytic solution>

### (EXAMPLE 5)

In Example 5, lithium ion secondary batteries were created using electrolytic solutions 5A (useful for understanding the invention), 5B and 5C (according to the invention) prepared with the compositions shown in Table 15. The electrolytic solution 5A was obtained as a result of substituting EMC in the nonaqueous solvent of the electrolytic solution 3A in Example 3 with methyl 2,2,2-trifluoroethyl carbonate (FEMC). The electrolytic solution 5B was obtained as a result of substituting EMC in the nonaqueous solvent of the electrolytic solution 3A in Example 3 with methyl 3,3,3-trifluoropropionate (FMP). The electrolytic solution 5C was obtained as a result of substituting EMC in the nonaqueous solvent of the electrolytic solution 3A in Example 3 with 2,2,2-trifluoroethyl acetate (FEA).

FEMC was synthesized by substantially the same method as the production method disclosed in Japanese Laid-Open Patent Publication No. 6-219992, and FMP and FEA were synthesized by substantially the same method as the production method disclosed in Japanese Laid-Open Patent Publication No. 2009-239414.

**[Table 15]**

| Electrolytic solution | Support electrolyte salt | Composition of nonaqueous solvent (vol) |
|---|---|---|
| Electrolytic solution 5A | 1M LiPF₆ | EC:FEMC:TFMCP=41:45:14 |
| Electrolytic solution 5B | 1M LiPF₆ | EC:FMP:TFMCP=41:45:14 |
| Electrolytic solution 5C | 1M LiPF₆ | EC:FEA:TFMCP=41:45:14 |

The lithium ion secondary batteries were created as follows.

### <Creation of the positive electrode>

The positive electrodes were created in substantially the same manner as in Example 3.

### <Creation of the negative electrode>

The negative electrodes were created in substantially the same manner as in Example 3.

### <Assembly>

The assembly for creating batteries was performed in substantially the same manner as in Example 3 except that the electrolytic solutions 5A, 5B and 5C were each injected as the nonaqueous solvent 15. From the electrolytic solutions 5A, 5B and 5C, batteries 5a, 5b and 5c were obtained. Each battery had a thickness of 0.5 mm, a width of 50 mm and a height of 100 mm. The designed capacitance of each battery at the time of charge at 4.3 V was 40 mAh.

### <Evaluation on the high-rate discharge characteristic>

The high-rate discharge characteristic of each of the created batteries 5a (useful for understanding the invention), 5b and 5c was evaluated. In an environment of 25°C, each of the batteries was treated with constant current charge at a current value of 2 mA until the voltage became 4.3 V, and then treated with constant current discharge at a current value of 2 mA until the voltage became 3.0 V. The discharge capacitance obtained at this point was set as the initial discharge capacitance.

Next, each of batteries 5a, 5b and 5c was treated with constant current charge at a current value of 8mA until the voltage became 4.3V, and then treated with constant voltage charge at 4.3V until the current value was attenuated to 2mA. Then, each of the batteries was treated with constant current discharge at a current value of 40mA until the voltage became 3.0V. The discharge capacitance obtained at this point was set as the 1C high-rate discharge capacitance. The ratio of the 1C high-rate discharge capacitance with respect to the initial discharge capacitance for each battery is set as the 1C high-rate discharge characteristic (1C high-rate discharge characteristic = 1C high-rate discharge capacitance/initial discharge capacitance) and the percentage thereof is shown in Table 16.

### <High-temperature storage>

On each of the created batteries 5a, 5b and 5c, a high-temperature storage test was performed in a charged state.

In an environment of 25°C, each of the batteries was treated with constant current charge at a current value of 2mA until the voltage became 4.3V. Then, each of the batteries in the charged state was maintained in an environment of a constant temperature bath of 85°C for 3 days. It is considered that if the solvent contained in the electrolytic solution is oxidized and decomposed during this period, CO₂ is generated. Then, each of the batteries was taken out from the constant temperature bath, and the generated gas was quantized and component analysis was performed by gas chromatography. Table 16 shows the amount of CO₂ generation calculated from the results.

**[Table 16]**

| | Battery | Initial discharge capacitance (mAh/g) | 1 C high-rate discharge characteristic (%) | Amount of CO₂ generation (ml) |
|---|---|---|---|---|
| Example 5 | 5a | 39.9 | 71.8 | 0.21 |
| | 5b | 39.8 | 82.6 | 0.24 |
| | 5c | 39.9 | 83.1 | 0.39 |

As shown in Table 16, as compared with in the battery 3a in Example 3 (Table 14), in the batteries 5b and 5c containing a fluoridized chain ester substituting EMC, the 1C high-rate discharge characteristic is improved and the amount of CO₂ generation is suppressed. It is considered that this occurs for the following reasons. Since the viscosity of a chain ester is generally lower than that of a chain carbonate, lithium ions more easily move in the electrolytic solution containing the chain ester, and thus the high-rate discharge characteristic is improved. In addition, the oxidation resistance of a chain ester is generally low but is improved when fluorine atoms are introduced into the chain ester, and thus decomposition of the chain ester due to oxidation is suppressed.

As compared with the battery 3a in Example 3, the battery 5a containing a fluoridized chain carbonate substituting EMC has a 1C high-rate discharge characteristic declined to a certain extent. It is considered that this occurs because fluoridization of EMC slightly raises the viscosity although improving the oxidation resistance. However, the 1C high-rate discharge characteristic of the battery 5a is higher than that of each of the batteries 3b, 3c, 3d and 3e. Therefore, the battery 5a is considered to have a sufficiently good high-rate discharge characteristic for practical use. The amount of CO₂ generation of the battery 5a is suppressed to be 1/2 of that of the battery 3a in Example 3.

From the results of Example 5, it is understood that where a nonaqueous solvent formed of a mixture of TFMCP, which is fluorine-containing cyclic saturated hydrocarbon, EC, which is a cyclic carbonate having a relative dielectric constant of 25 or higher, and a fluoridized chain ester is used, a lithium ion secondary battery which has a high high-rate discharge characteristic, has generation of CO₂ suppressed, and is highly reliable after being stored at a high temperature can be provided.

### INDUSTRIAL APPLICABILITY

A nonaqueous solvent and an electrolytic solution for an electrical storage device disclosed in the present application are superb in the oxidation resistance under a high voltage and have a high ion conductivity. Such a nonaqueous solvent and electrolytic solution realize an electrical storage device which exhibits high charge/discharge characteristics and is reliable after being stored for a long time at a high temperature even when being charged at a high voltage. Such a nonaqueous solvent and electrolytic solution are especially preferably usable for various types of electrical storage devices which are charged at a high voltage.

### REFERENCE SIGNS LIST

- 1: Positive electrode
- 1a: Positive electrode current collector
- 1b: Positive electrode active material layer
- 2: Negative electrode
- 2a: Negative electrode current collector
- 2b: Negative electrode active material layer
- 3: Sepator
- 11: Positive electrode lead
- 12: Negative electrode lead
- 13: Electrode unit
- 14: Battery case
- 15: Nonaqueous electrolytic solution
- 16a, 16b: Aluminum current collector
- 17: Separator
- 18: Spacer
- 19: Sealing plate
- 20: Gasket
- 21: Case
- 22a, 22b: Electrode compound
- 23a, 23b: Electrode

## Claims

1. A nonaqueous solvent for an electrical storage device, comprising:
fluorine-containing cyclic saturated hydrocarbon having a structure represented by the following general formula (1) in which one or two substituents R are introduced into a cyclopentane ring;
a compound having a relative dielectric constant of 25 or higher in the temperature range of 25 °C to 40 °C;
in general formula (1), R is represented by CₙX₂ₙ₊₁ where n is 1 or 2, at least one of (2n+1) pieces of X's is F, and the other X's are H 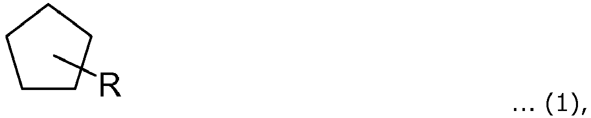 wherein the nonaqueous solvent for an electrical storage device further comprises a fluoridized chain ester with hydrogen atoms being partially substituted with fluorine,
wherein the fluoridized chain ester includes at least one of methyl 3,3,3-trifluoropropionate and 2,2,2-trifluoroethyl acetate.

2. The nonaqueous solvent for an electrical storage device of claim 1, further comprising a chain carbonate.

3. The nonaqueous solvent for an electrical storage device of claim 1 or 2, wherein the fluorine-containing cyclic saturated hydrocarbon is trifluoromethylcyclopentane.

4. The nonaqueous solvent for an electrical storage device of claim 1 or 2, wherein the fluorine-containing cyclic saturated hydrocarbon is 1,1-bis(trifluoromethyl)cyclopentane.

5. The nonaqueous solvent for an electrical storage device of claim 1 or 2, wherein the fluorine-containing cyclic saturated hydrocarbon is (2-fluoroethyl)cyclopentane.

6. The nonaqueous solvent for an electrical storage device of any one of claims 1 to 5, wherein the compound having a relative dielectric constant of 25 or higher is a cyclic carbonate or a cyclic sulfone.

7. A nonaqueous electrolytic solution for an electrical storage device, comprising:
the nonaqueous solvent for an electrical storage device of any one of claims 1 to 6; and
a support electrolyte salt.

8. The nonaqueous electrolytic solution for an electrical storage device of claim 7, wherein the support electrolyte salt includes at least one of a lithium salt and a quaternary ammonium salt.

9. An electrical storage device, comprising the nonaqueous solvent for an electrical storage device of any one of claims 1 to 6.

10. A lithium ion secondary battery, comprising the nonaqueous electrolytic solution for an electrical storage device of claim 7 or 8.

11. An electric double layer capacitor, comprising the nonaqueous electrolytic solution for an electrical storage device of claim 7 or 8.

## Patentansprüche

1. Nichtwässriges Lösungsmittel für eine elektrische Speichervorrichtung, umfassend:
einen fluorhaltigen zyklischen gesättigten Kohlenwasserstoff mit einer durch die folgende allgemeine Formel (1) dargestellten Struktur, in welchem ein oder zwei Substituenten R in einen Cyclopentanring eingebracht sind;
eine Verbindung mit einer relativen Dielektrizitätskonstante von 25 oder höher in dem Temperaturbereich von 25°C bis 40°C;
in der allgemeinen Formel (1) ist R dargestellt durch CₙX₂ₙ₊₁, wobei n 1 oder 2 ist, wenigstens eines von (2n+1) Stücken der X F ist und die anderen X H sind 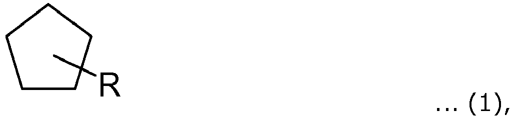
wobei das nichtwässrige Lösungsmittel für eine elektrische Speichervorrichtung außerdem einen fluorierten Kettenester mit Wasserstoffatomen, die teilweise mit Fluor substituiert sind, umfasst,
wobei der fluorierte Kettenester wenigstens eines von 3,3,3-Trifluorpropionat und 2,2,2-Trifluorethylacetat beinhaltet.

2. Nichtwässriges Lösungsmittel für eine elektrische Speichervorrichtung nach Anspruch 1, das außerdem ein Kettencarbonat umfasst.

3. Nichtwässriges Lösungsmittel für eine elektrische Speichervorrichtung nach Anspruch 1 oder 2, wobei der fluorhaltige zyklische gesättigte Kohlenwasserstoff Trifluormethylcyclopentan ist.

4. Nichtwässriges Lösungsmittel für eine elektrische Speichervorrichtung nach Anspruch 1 oder 2, wobei der fluorhaltige zyklische gesättigte Kohlenwasserstoff 1,1,Bis(trifluormethyl)cyclopentan ist.

5. Nichtwässriges Lösungsmittel für eine elektrische Speichervorrichtung nach Anspruch 1 oder 2, wobei der fluorhaltige zyklische gesättigte Kohlenwasserstoff (2-Fluorethyl)cyclopentan ist.

6. Nichtwässriges Lösungsmittel für eine elektrische Speichervorrichtung nach einem der Ansprüche 1 bis 5, wobei die Verbindung mit einer relativen dielektrischen Konstante von 25 oder höher ein zyklisches Carbonat oder ein zyklisches Sulfon ist.

7. Nichtwässrige Elektrolytlösung für eine elektrische Speichervorrichtung, umfassend:
das nichtwässrige Lösungsmittel für eine elektrische Speichervorrichtung nach einem der Ansprüche 1 bis 6; und
ein Trägerelektrolytsalz.

8. Nichtwässrige Elektrolytlösung für eine elektrische Speichervorrichtung nach Anspruch 7, wobei das Trägerelektrolytsalz wenigstens eines von einem Lithiumsalz und einem quartären Ammoniumsalz umfasst.

9. Elektrische Speichervorrichtung, die das nichtwässrige Lösungsmittel für eine elektrische Speichervorrichtung nach einem der Ansprüche 1 bis 6 umfasst.

10. Lithiumionensekundärbatterie, die die nichtwässrige Elektrolytlösung für eine elektrische Speichervorrichtung nach Anspruch 7 oder 8 umfasst.

11. Elektrischer Doppelschichtkondensator, der die nichtwässrige Elektrolytlösung für eine elektrische Speichervorrichtung nach Anspruch 7 oder 8 umfasst.

## Revendications

1. Solvant non aqueux pour un dispositif de stockage électrique, comprenant :
un hydrocarbure saturé cyclique fluoré ayant une structure représentée par la formule générale (1) suivante, dans laquelle un ou deux substituants R sont introduits dans un cycle cyclopentane ;
un composé ayant une constante diélectrique relative de 25 ou plus dans la plage de température allant de 25 °C à 40 °C ; et
dans la formule générale (1), R est représenté par CₙX₂ₙ₊₁ où n vaut 1 ou 2, au moins l'un des (2n+1) fragments X est F, et les autres X sont H, 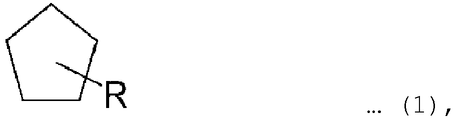
dans lequel le solvant non aqueux pour un dispositif de stockage électrique comprend en outre un ester à chaîne fluorée avec des atomes d'hydrogène qui sont partiellement remplacés par du fluor,
dans lequel l'ester à chaîne fluorée englobe au moins l'un parmi le 3,3,3-trifluoropropionate de méthyle et l'acétate de 2,2,2-trifluoroéthyle.

2. Solvant non aqueux pour un dispositif de stockage électrique selon la revendication 1, comprenant en outre une chaîne de carbonate.

3. Solvant non aqueux pour un dispositif de stockage électrique selon la revendication 1 ou 2, dans lequel l'hydrocarbure saturé cyclique fluoré est le trifluorométhylcyclopentane.

4. Solvant non aqueux pour un dispositif de stockage électrique selon la revendication 1 ou 2, dans lequel l'hydrocarbure saturé cyclique fluoré est le 1,1-bis(trifluorométhyl)cyclopentane.

5. Solvant non aqueux pour un dispositif de stockage électrique selon la revendication 1 ou 2, dans lequel l'hydrocarbure saturé cyclique fluoré est le (2-fluoroéthyl)cyclopentane.

6. Solvant non aqueux pour un dispositif de stockage électrique selon l'une quelconque des revendications 1 à 5, dans lequel le composé ayant une constante diélectrique relative de 25 ou plus est un carbonate cyclique ou une sulfone cyclique.

7. Solution électrolytique non aqueuse pour un dispositif de stockage électrique, comprenant :
le solvant non aqueux pour un dispositif de stockage électrique selon l'une quelconque des revendications 1 à 6 ; et
un sel électrolyte de support.

8. Solution électrolytique non aqueuse pour un dispositif de stockage électrique selon la revendication 7, dans laquelle le sel électrolyte de support englobe au moins l'un parmi un sel de lithium et un sel d'ammonium quaternaire.

9. Dispositif de stockage électrique comprenant le solvant non aqueux pour un dispositif de stockage électrique selon l'une quelconque des revendications 1 à 6.

10. Pile rechargeable au lithium-ion, comprenant la solution électrolytique non aqueuse pour un dispositif de stockage électrique selon la revendication 7 ou 8.

11. Condensateur double couche électrique, comprenant la solution électrolytique non aqueuse pour un dispositif de stockage électrique selon la revendication 7 ou 8.
